# EUROPEAN PATENT SPECIFICATION

(11) **EP 3 709 550 B1**
(45) Date of publication and mention of the grant of the patent: **25.05.2022**
(21) Application number: 18877910.2
(22) Date of filing: 16.11.2018
(51) Int. Cl.: H04L 5/00, H04J 11/00, H04W 92/02, H04W 28/26, H04W 72/04, H04W 72/08

(54) **INFORMATION INDICATION METHOD, TERMINAL DEVICE AND NETWORK DEVICE**
INFORMATIONSANZEIGEVERFAHREN, ENDGERÄT UND NETZWERKVORRICHTUNG
PROCÉDÉ D'INDICATION D'INFORMATIONS, DISPOSITIF TERMINAL ET DISPOSITIF RÉSEAU

(30) Priority: 17.11.2017 CN 201711148386
(43) Date of publication of application: 16.09.2020
(73) Proprietor: Huawei Technologies Co., Ltd., Longgang District Shenzhen, Guangdong 518129 (CN)
(72) Inventor: GUO, Zhiheng, Shenzhen Guangdong 518129 (CN); BI, Wenping, Shenzhen Guangdong 518129 (CN); WAN, Lei, Shenzhen Guangdong 518129 (CN); SHEN, Zukang, Shenzhen Guangdong 518129 (CN); ZHAO, Yang, Shenzhen Guangdong 518129 (CN); LONG, Yi, Shenzhen Guangdong 518129 (CN); FEI, Yongqiang, Shenzhen Guangdong 518129 (CN)
(74) Representative: Roth, Sebastian
(86) International application number: PCT/CN2018/116020
(87) International publication number: WO 2019/096272

(56) References cited:
- EP-A1- 3 703 450
- CN-A- 101 605 356
- CN-A- 102 202 400
- CN-A- 102 547 872
- US-A1- 2012 252 487
- SONY: "NR coexistence with eMTC", 3GPP DRAFT; R1-1716252 - NR COEX WITH EMTC V0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Nagoya, Japan; 20170918 - 20170921 17 September 2017 (2017-09-17), XP051339709, Retrieved from the Internet: URL:http://www.3gpp.org/ftp/Meetings_3GPP_ SYNC/RAN1/Docs/ [retrieved on 2017-09-17]
- ERICSSON: "NR and LTE Coexistence", 3GPP DRAFT; R1-1716532 NR AND LTE COEXISTENCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nagoya, Japan; 20170918 - 20170921 17 September 2017 (2017-09-17), XP051339985, Retrieved from the Internet: URL:http://www.3gpp.org/ftp/Meetings_3GPP_ SYNC/RAN1/Docs/ [retrieved on 2017-09-17]
- ERICSSON: "On NB-IoT, eMTC and NR coexistence", 3GPP DRAFT; R1-1703866 - ON NB-IOT EMTC AND NR COEXISTENCE (REVISION OF R1-1703115), 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG1, no. Athens, Greece; 20170413 - 20170417 16 February 2017 (2017-02-16), XP051236659, Retrieved from the Internet: URL:http://www.3gpp.org/ftp/tsg_ran/WG1_RL 1/TSGR1_88/Docs/ [retrieved on 2017-02-16]

## Description

### TECHNICAL FIELD

This application relates to the field of communications technologies, and in particular, to an information indication method, a terminal device, and a network device.

### BACKGROUND

With continuous development of wireless communications technologies, both long term evolution (Long term evolution, LTE for short) and a 5th generation mobile communications network (The fifth-generation mobile networks, 5G for short) new radio (New radio, NR for short) may be deployed on a frequency band lower than 6 GHz. In a scenario in which both LTE and 5G NR are deployed, signal interference may exist between LTE and NR. For example, data transmission in NR may cause interference to reference signals in LTE, for example, a cell-specific reference signal (Cell-specific Reference Signal, CRS for short) or a channel state information reference signal (Channel State Information Reference Signal, CSI-RS for short). To ensure that the LTE system may serve a conventional LTE user, a terminal device needs to reserve (reserving) NR resource at a location corresponding to the reference signal in LTE. For example, for a physical downlink shared channel (Physical downlink shared channel, PDSCH for short) of an NR whose subcarrier spacing (Subcarrier Spacing, SCS for short) is 15 kHz, the terminal device may reserve an NR resource corresponding to a resource location of an LTE CRS. A location of the to-be-reserved resource may be indicated by using a frequency shift V_{shift} (cell-specific frequency shift) and an antenna port quantity (CRS antenna port (s)) of the CRS, so as to resolve a problem that a downlink CRS in the LTE system is interfered with by a downlink data signal in the NR system.

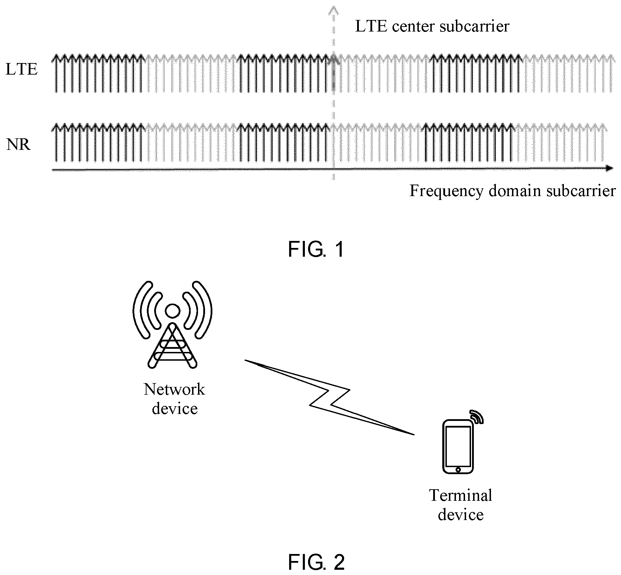

However, a center subcarrier of a frequency used on an LTE downlink is a direct current subcarrier (Direct-Current subcarrier, DC subcarrier for short), and the direct current subcarrier is not used for information transmission. Consequently, alignment locations of resource blocks (Resource Block, RB for short) on both sides of an NR subcarrier corresponding to the LTE center subcarrier are different in a downlink shared frequency part of the LTE system and the NR system. As shown in FIG. 1, it is assumed that RBs of LTE and NR are totally aligned on a shared frequency band of LTE and NR on a left side of an LTE center subcarrier. On a right side of an NR subcarrier corresponding to the LTE center subcarrier, the LTE center subcarrier is a DC subcarrier which is not used for information transmission. In other words, the LTE center subcarrier is not counted as an RB subcarrier, but the NR subcarrier corresponding to the LTE center subcarrier is counted as an RB subcarrier in NR. Therefore, a location of RB in NR changes compared with a location of an RB in LTE, and alignment statuses of frequency domain resource locations in NR that correspond to an LTE CRS are different on a left side and the right side of the NR subcarrier corresponding to the LTE center subcarrier, in other words, subcarrier shifts on the left side and the right side are different. A frequency of a subcarrier on the left side is lower than a frequency of a subcarrier on the right side. Therefore, the terminal device cannot accurately determine, based on only the frequency shift V_{shift} and the antenna port quantity of the CRS, a location of a resource that needs to be reserved in the NR system.

SONY, "NR coexistence with eMTC", vol. TSG RAN, no. Nagoya, Japan; 20170918 - 20170921, (20170917), 3GPP DRAFT; R1-1716252 - NR COEX WITH EMTC V0, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/Meetings_3GPP_SYNC/RAN1/Docs/, (20170917), provides view on how eMTC (for releases up to and including Release-15) can be supported in-band within an NR carrier through reservation of resources within the NR carrier. To support reserved resources within the NR carrier, the following proposals are made: Proposal 1: NR should support reservation of resources for the following eMTC channels and signals: CRS, PSS / SSS and repeated PBCH. Proposal 2: An NR-UE needs to be signalled the following in order to determine the reserved resources for eMTC: Bandwidth and centre frequency location of the LTE-eMTC in-band carrier; Number of antenna ports in the LTE-eMTC in-band carrier; Cell-ID of the in-band LTE-eMTC in-band carrier; Subframe offset of LTE-eMTC in-band carrier; Start symbol for MPDCCH and PDSCH in eMTC in-band carrier: startSymbolBR.

### SUMMARY

Embodiments of the present invention provide an information indication method, a terminal device, and a network device, to improve reliability of a determined location of a resource that needs to be reserved in a system.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to one aspect, an embodiment of the present invention provides an information indication method, including: receiving, by a terminal device, indication information from a network device, and determining a first resource based on the indication information. The indication information indicates a frequency location information and bandwidth information, the frequency location information may include a number of a first subcarrier, an absolute radio frequency channel number of the first subcarrier, or a first frequency, and the first resource is a to-be-reserved resource. The first resource is a to-be-reserved resource of a second system, the to-be-reserved resource may be a resource to be reserved in the second system at a resource location at which a first system sends a reference signal, and the terminal device accesses the first system and the second system. Therefore, the following problem may be resolved: Relative locations of a reference signal in a resource block are inconsistent on a left side and a right side of a center subcarrier because of a resource shift phenomenon caused by the center subcarrier, that is, locations of the resource that needs to be reserved in a resource block are inconsistent on the left side and the right side of the center subcarrier. This improves reliability of a determined location of the resource that needs to be reserved in the system.

In a possible design, the number of the first subcarrier may be a number of a subcarrier that is of the second system such as an NR system and that corresponds to a center subcarrier of the first system such as an LTE system, and the first frequency may be a frequency of the LTE center subcarrier. Therefore, the terminal device may determine a location of the first subcarrier based on the frequency location information.

In a possible design, the bandwidth information may include at least one of first bandwidth, a second subcarrier quantity, a first resource block quantity, and a second resource block bitmap. The first bandwidth may be bandwidth (or an index) of the first system such as LTE. The second subcarrier quantity may be a subcarrier quantity (or an index) corresponding to the bandwidth of the first system such as LTE. The first resource block quantity may be an RB quantity (or an index) corresponding to the bandwidth of the first system such as LTE. The second resource block bitmap may be an RB bitmap corresponding to bandwidth such as a bandwidth part (Bandwidth Part, BWP for short) of the second system such as NR. Alternatively, the bandwidth information may include at least two of first location information of a first resource unit, second location information of a second resource unit, a quantity of first resource units, or a quantity of second resource units. The first resource unit and the second resource unit may be the same or different. For example, the first resource unit and/or the second resource unit may be an RB, a subcarrier, or the like. In other words, the indication information may further include a location (for example, a number) of a start subcarrier or RB of a shared frequency of systems and a location of an end subcarrier or RB of the shared frequency of the systems, or include a location of a start subcarrier or RB of a shared frequency of systems and a quantity of subcarriers or RBs, or include a location of an end subcarrier or RB of a shared frequency of systems and a quantity of subcarriers or RBs. Therefore, the terminal device may determine the shared frequency (a commonly used frequency) of systems, for example, a shared frequency of LTE and NR, based on the bandwidth information.

In a possible design, the terminal device may determine the location of the first subcarrier, for example, determine the location of the first subcarrier based on the frequency location information indicated by the indication information. The first resource determined in a first frequency domain range and that determined in a second frequency domain range have different locations in a resource block. The first frequency domain range includes a frequency that is in second bandwidth and that is lower than a frequency at the location of the first subcarrier, and the second frequency domain range includes a frequency that is in the second bandwidth and that is higher than the frequency at the location of the first subcarrier. Optionally, the second bandwidth may be the shared frequency of systems such as LTE and NR, and the second bandwidth may be determined based on the bandwidth information, or may be determined according to a default rule (for example, the second bandwidth is the entire BWP).

In a possible design, a number of a third subcarrier included in the first resource that is determined in a first frequency domain range and a number of a fourth subcarrier included in the first resource that is determined in a second frequency domain range meet the following: a remainder obtained by dividing the number of the third subcarrier by 3 is unequal to a remainder obtained by dividing the number of the fourth subcarrier by 3, or there is a difference of 1 between a remainder obtained by dividing the number of the third subcarrier by 3 and a remainder obtained by dividing the number of the fourth subcarrier by 3. The first frequency domain range includes a frequency that is in second bandwidth and that is lower than a frequency at the location of the first subcarrier, and the second frequency domain range includes a frequency that is in the second bandwidth and that is higher than the frequency at the location of the first subcarrier. The third subcarrier may be any subcarrier corresponding to the first resource in the first frequency domain range, and the fourth subcarrier may be any subcarrier corresponding to the first resource in the second frequency domain range.

In a possible design, if the location of the first subcarrier falls within a range of downlink bandwidth such as a BWP of a system in which a resource needs to be reserved, namely, the second system such as NR, the first resource that is determined within a range from a start subcarrier of a second bandwidth, that is, the shared frequency, to the first subcarrier in the second system, namely, a first frequency domain range, and the first resource that is determined within a range from the first subcarrier to an end subcarrier of the second bandwidth in the second system, namely, a second frequency domain range, have different locations in a resource block. For example, subcarrier numbers in an RB are different. In other words, there is a shift. Alternatively, manners of determining the first resource in the first frequency domain range and the second frequency domain range are different. Alternatively, a number of a third subcarrier included in the first resource that is determined in a first frequency domain range and a number of a fourth subcarrier included in the first resource that is determined in a second frequency domain range meet the following: a remainder obtained by dividing the number of the third subcarrier by 3 is unequal to a remainder obtained by dividing the number of the fourth subcarrier by 3, or there is a difference of 1 between a remainder obtained by dividing the number of the third subcarrier by 3 and a remainder obtained by dividing the number of the fourth subcarrier by 3. Optionally, if the first subcarrier falls beyond a range of downlink bandwidth used by the second system, a manner of determining the first resource may be the same as a manner of determining the first resource in the first frequency domain range; or subcarrier numbers in an RB are the same; or a number of a third subcarrier included in the first resource that is determined in a first frequency domain range and a number of a fourth subcarrier included in the first resource that is determined in a second frequency domain range meet the following: a remainder obtained by dividing the number of the third subcarrier by 3 is equal to a remainder obtained by dividing the number of the fourth subcarrier by 3, or there is a difference of 0 between a remainder obtained by dividing the number of the third subcarrier by 3 and a remainder obtained by dividing the number of the fourth subcarrier by 3.

In a possible design, the indication information may be further indicate first information, and the first information may include information about a time domain location, for example, a number of an orthogonal frequency division multiplexing (Orthogonal Frequency Division Multiplexing, OFDM for short) symbol, occupied by the first resource. For example, the number of the OFDM symbol may be {0, 1, 4, 7, 8, 11}, {2, 5, 6, 9}, {2, 5, 9}, {1, 4, 5, 8}, {0, 4, 7, 11}, {1, 4, 8}, {0, 3, 6, 7, 10}, or {3, 6, 10} (or the time domain location information may be an index of the number set). Details are not described herein. Therefore, the terminal device may further determine, based on the indication information, the time domain location of the first resource that needs to be reserved, and further determine the first resource based on the time domain location.

In a possible design, the indication information may be further indicate second information, and the second information may include information about a frequency domain resource occupied by the first resource in a resource block, for example, a subcarrier number (or an index of a number set). Therefore, the terminal device may determine frequency domain location information of the first resource based on the information about the frequency domain resource occupied by the first resource in a resource block, for example, the subcarrier number, and further determine actual locations of the first resource in different areas based on a relationship between the frequency domain location information of the first resource and the location of the first subcarrier.

In a possible design, the indication information may be further indicate third information, the third information may include a frequency shift and information about a resource occupied by a second resource in a resource block, and the resource information may include at least one of a subcarrier quantity (or a quantity index) and a subcarrier number (or an index of a number set). Therefore, the terminal device may determine actual locations of the first resource in different areas based on information such as the information about the resource occupied by the second resource in a resource block, the frequency shift, the location of the first subcarrier, and the bandwidth information. The second resource may be a placeholder resource, that is, a resource for which a resource location needs to be reserved in another system such as the second system. For example, the second resource may be a reference signal in the first system, for example, an LTE CRS.

In a possible design, the indication information may be further indicate fourth information, and the fourth information may include antenna port information and a frequency shift. Therefore, the terminal device may determine actual locations of the first resource in different areas based on information such as the antenna port information such as an antenna port quantity (or an index of a port quantity), the frequency shift, the location of the first subcarrier, and the shared frequency.

In a possible design, the indication information may be further indicate fifth information, the fifth information may include a frequency shift and information about a resource occupied by the first resource in a resource block, and the resource information may include at least one of a subcarrier quantity (or a quantity index) and a subcarrier number (or an index of a number set). Therefore, the terminal device may determine actual locations of the first resource in different areas based on information such as the information about the resource occupied by the first resource in a resource block, the frequency shift, the location of the first subcarrier, and the shared frequency.

In a possible design, one or more of the frequency location information, the bandwidth information, the number of the OFDM symbol occupied by the first resource, the information about the frequency domain resource occupied by the first resource in a resource block, the information about the frequency domain resource occupied by the second resource in a resource block, the frequency shift, and the antenna port information may be preconfigured.

In a possible design, the number of the first subcarrier is a number of a subcarrier that is in the second system and that corresponds to a center subcarrier of the first system, and the first bandwidth is bandwidth of the first

In a possible design, the first resource is a resource to be reserved in the second system for a reference signal such as a CRS in the first system.

In a possible design, the first system is an LTE system, and the second system is an NR system.

According to another aspect, an embodiment of the present invention further provides an information indication method, including: generating, by a network device, indication information, and sending the indication information to a terminal device, so that the terminal device may receive the indication information, and determine, based on the indication information a first resource that needs to be reserved. The indication information is used to determine a to-be-reserved resource of a second system accessed by the terminal device, the to-be-reserved resource is a resource to be reserved in the second system at a resource location at which a first system sends a reference signal, and the terminal device accesses the first system and the second system. This improves reliability of a determined location of the resource that needs to be reserved in the system.

The indication information indicates a frequency location information and bandwidth information, and the frequency location information may include a number of a first subcarrier, an absolute radio frequency channel number of the first subcarrier, or a first frequency.

In a possible design, the number of the first subcarrier may be a number of a subcarrier that is of the second system such as an NR system and that corresponds to a center subcarrier of the first system such as an LTE system, and the first frequency may be a frequency of the LTE center subcarrier. The network device indicates the frequency location information, so that the terminal device may determine a location of the first subcarrier based on the frequency location information.

In a possible design, the bandwidth information may include at least one of first bandwidth, a second subcarrier quantity, a first resource block quantity, and a second resource block bitmap. The first bandwidth may be bandwidth (or a bandwidth index) of the first system such as LTE. The second subcarrier quantity may be a subcarrier quantity (or an index index) corresponding to the bandwidth of the first system such as LTE. The first resource block quantity may be an RB quantity (or a quantity index) corresponding to the bandwidth of the first system such as LTE. The second resource block bitmap may be an RB bitmap corresponding to bandwidth such as a BWP of the second system such as NR. Alternatively, the bandwidth information may include at least two of first location information of a first resource unit, second location information of a second resource unit, a quantity of first resource units, or a quantity of second resource units. The first resource unit and the second resource unit may be the same or different. For example, the first resource unit and/or the second resource unit may be an RB, a subcarrier, or the like. The network device indicates the bandwidth information, so that the terminal device may determine a shared frequency (a commonly used frequency) of systems, for example, a shared frequency of LTE and NR, based on the bandwidth information.

In a possible design, the indication information may be further indicate first information, and the first information may include information about a time domain location, for example, a number of an OFDM symbol, occupied by the first resource. For example, the number of the OFDM symbol may be {0, 1, 4, 7, 8, 11}, {2, 5, 6, 9}, {2, 5, 9}, {1, 4, 5, 8}, {0, 4, 7, 11}, {1, 4, 8}, {0, 3, 6, 7, 10}, or {3, 6, 10} (or an index of a number set). Details are not described herein. The network device indicates the number of the OFDM symbol, so that the terminal device may further determine, based on the indication information, the time domain location of the first resource that needs to be reserved, and further determine the first resource based on the time domain location.

In a possible design, the indication information may be further indicate second information, and the second information may include information about a frequency domain resource occupied by the first resource in a resource block, for example, a subcarrier number (or an index of a number set). The network device indicates the information about the frequency domain resource occupied by the first resource in a resource block, for example, a subcarrier number (or an index of a number set), so that the terminal device may determine frequency domain location information of the first resource based on a number of a subcarrier occupied by the first resource in a resource block, and further determine actual locations of the first resource in different areas based on the frequency domain location information of the first resource, the location of the first subcarrier, the bandwidth information, and the like.

In a possible design, the indication information may be further indicate third information, the third information may include a frequency shift and information about a frequency domain resource occupied by a second resource in a resource block, and the frequency domain resource information may include at least one of a subcarrier quantity (or a quantity index) and a subcarrier number (or an index of a number set). The network device indicates the information about the frequency domain resource occupied by the second resource in a resource block and the frequency shift, so that the terminal device may determine actual locations of the first resource in different areas based on information such as the information about the frequency domain resource occupied by the second resource in a resource block, the frequency shift, the location of the first subcarrier, and the bandwidth information. The second resource may be a placeholder resource, that is, a resource for which a resource location needs to be reserved in another system such as the second system. For example, the second resource may be a reference signal in the first system, for example, an LTE CRS.

In a possible design, the indication information may be further indicate fourth information, and the fourth information may include antenna port information and a frequency shift. The network device indicates the antenna port information and the frequency shift, so that the terminal device may determine actual locations of the first resource in different areas based on information such as the antenna port information such as an antenna port quantity (or an index of a port quantity), the frequency shift, the location of the first subcarrier, and the shared frequency.

In a possible design, the indication information may be further indicate fifth information, the fifth information may include information about a frequency domain resource occupied by the first resource in a resource block and a frequency shift, and the frequency domain resource information may include at least one of a subcarrier quantity (or a quantity index) and a subcarrier number (or an index of a number set). The network device indicates the information about the frequency domain resource occupied by the first resource in a resource block and the frequency shift, so that the terminal device may determine actual locations of the first resource in different areas based on information such as the information about the frequency domain resource occupied by the first resource in a resource block, the frequency shift, the location of the first subcarrier, and the shared frequency.

In a possible design, the number of the first subcarrier is a number of a subcarrier that is in the second system and that corresponds to a center subcarrier of the first system, and the first bandwidth is bandwidth of the first system.

In a possible design, the first resource is a resource to be reserved in the second system for a reference signal such as a CRS in the first system.

In a possible design, the first system is an LTE system, and the second system is an NR system.

According to still another aspect, an embodiment of the present invention further provides a terminal device. The terminal device has functions of implementing terminal device behavior in the foregoing method examples. The functions may be implemented by hardware, or may be implemented by hardware executing corresponding software. The hardware or the software includes one or more units or modules corresponding to the foregoing functions.

In a possible design, a structure of the terminal device includes a processing unit and a communications unit. The processing unit is configured to support the terminal device in performing a corresponding function in the foregoing methods. The communications unit is configured to support the terminal device in communicating with another device such as a network device. The terminal device may further include a storage unit. The storage unit is coupled to the processing unit, and the storage unit stores a program instruction and data that are necessary for the terminal device. For example, the processing unit may be a processor, the communications unit may be a transceiver, and the storage unit may be a memory.

According to still another aspect, an embodiment of the present invention provides a network device. The network device has functions of implementing network device behavior in the foregoing method examples. The functions may be implemented by hardware, or may be implemented by hardware executing corresponding software. The hardware or the software includes one or more units or modules corresponding to the foregoing functions.

In a possible design, a structure of the network device includes a processing unit and a communications unit. The processing unit is configured to support the network device in performing a corresponding function in the foregoing methods. The communications unit is configured to support the network device in communicating with another device such as a terminal device. The network device may further include a storage unit. The storage unit is coupled to the processing unit, and the storage unit stores a program instruction and data that are necessary for the network device. For example, the processing unit may be a processor, the communications unit may be a transceiver, and the storage unit may be a memory.

According to still another aspect, an embodiment of the present invention provides a communications system, and the system includes the terminal device and/or the network device in the foregoing aspects. In another possible design, the system may further include another device that interacts with the terminal device or the network device in the solutions provided in the embodiments of the present invention.

According to still another aspect, an embodiment of the present invention provides a computer storage medium, configured to store a computer software instruction used by the foregoing terminal device. The computer storage medium includes a program designed for executing the foregoing aspects.

According to still another aspect, an embodiment of the present invention provides a computer storage medium, configured to store a computer software instruction used by the foregoing network device. The computer storage medium includes a program designed for executing the foregoing aspects.

According to still another aspect, this application further provides a computer program product including an instruction. When the instruction runs on a computer, the computer performs the methods in the foregoing aspects.

According to still another aspect, this application provides a chip system, and the chip system includes a processor that is used by a terminal device to implement functions in the foregoing aspects, for example, process data and/or information in the foregoing methods. In a possible design, the chip system further includes a memory. The memory is configured to store a program instruction and data that are necessary for the terminal device. The chip system may include a chip, or may include a chip and another discrete device.

According to still another aspect, this application provides a chip system, and the chip system includes a processor that is used to support a network device in implementing functions in the foregoing aspects, for example, generating data and/or information in the foregoing methods. In a possible design, the chip system further includes a memory. The memory is configured to store a program instruction and data that are necessary for the network device. The chip system may include a chip, or may include a chip and another discrete device.

Compared with the prior art, in the solutions provided in the embodiments of the present invention, the network device may generate the indication information including the frequency location information and/or the bandwidth information, to indicate location information of a subcarrier that needs to be reserved in the second system such as NR for a reference signal such as a CRS in the first system such as LTE, so that the terminal device may determine a location of the center subcarrier based on the frequency location information and/or determine the shared frequency of LTE and NR based on the bandwidth information, and further determine, based on information such as the location of the center subcarrier and the shared frequency, locations of the resource that needs to be reserved in different areas, thereby resolving a problem that relative locations of the CRS in a resource block are inconsistent on a left side and a right side of the LTE center subcarrier because of a resource shift phenomenon caused by the center subcarrier, that is, locations of the resource that needs to be reserved in a resource block are inconsistent on the left side and the right side of the center subcarrier. This improves reliability of a determined location of the resource that needs to be reserved in the system.

### BRIEF DESCRIPTION OF DRAWINGS

To describe the technical solutions in the embodiments of the present invention or in the background more clearly, the following briefly describes the accompanying drawings required for describing the embodiments of the present invention or the background.
FIG. 1 is a schematic diagram of a resource reservation scenario in LTE and NR;
FIG. 2 is a diagram of an application scenario a communications system according to an embodiment of the present invention;
FIG. 3 is a schematic diagram of interaction of an information indication method according to an embodiment of the present invention;
FIG. 4 is a schematic diagram of interaction of another information indication method according to an embodiment of the present invention;
FIG. 5 is a schematic diagram of a location relationship between a location of an LTE center subcarrier and a BWP according to an embodiment of the present invention;
FIG. 6 is a schematic diagram of a scenario in which a first resource is determined according to an embodiment of the present invention;
FIG. 7 is a schematic diagram of interaction of still another information indication method according to an embodiment of the present invention;
FIG. 8 is a schematic diagram of interaction of still another information indication method according to an embodiment of the present invention;
FIG. 9 is a schematic diagram of interaction of still another information indication method according to an embodiment of the present invention;
FIG. 10 is a schematic structural diagram of a terminal device according to an embodiment of the present invention;
FIG. 11 is a schematic structural diagram of another terminal device according to an embodiment of the present invention;
FIG. 12 is a schematic structural diagram of still another terminal device according to an embodiment of the present invention;
FIG. 13 is a schematic structural diagram of a network device according to an embodiment of the present invention;
FIG. 14 is a schematic structural diagram of another network device according to an embodiment of the present invention; and
FIG. 15 is a schematic structural diagram of still another network device according to an embodiment of the present invention.

### DESCRIPTION OF EMBODIMENTS

The following describes the embodiments of the present invention with reference to the accompanying drawings in the embodiments of the present invention.

It should be understood that the technical solutions of this application may be specifically applied to various communications networks, for example, a global system for mobile communications (Global system for mobile communications, GSM for short), code division multiple access (Code Division Multiple Access, CDMA for short), wideband code division multiple access (Wideband Code Division Multiple Access, WCDMA for short), time division-synchronous code division multiple access (Time Division-Synchronous Code Division Multiple Access, TD-SCDMA for short), a universal mobile telecommunications system (Universal Mobile Telecommunications System, UMTS for short), and a long term evolution (Long Term Evolution, LTE for short) network. With continuous development of communications technologies, the technical solutions of this application may be further applied to a future network such as a 5G network, which may be referred to as a new radio (New Radio, NR for short) network, or may be applied to a D2D (device to device) network, an M2M (machine to machine) network, or the like.

In this application, a network device may be a network-side entity used to send or receive information, for example, may be a base station, or may be a transmission point (Transmission point, TP for short), a transmission and reception point (transmission and reception point, TRP for short), a relay device, or another network device with a base station function.

In this application, a terminal device is a device with a communication function, and may be referred to as a terminal. The terminal device may include a handheld device, an in-vehicle device, a wearable device, or a computing device with a wireless communication function, another processing device connected to a wireless modem, or the like. The terminal device may have different names in different networks, for example, a terminal, user equipment (User Equipment, UE for short), a mobile station, a subscriber unit, a station, a cellular phone, a personal digital assistant, a wireless modem, a wireless communications device, a handheld device, a laptop computer, a cordless phone, and a wireless local loop station. The terminal device may be a wireless terminal or a wired terminal. The wireless terminal may be a device that provides a user with voice and/or data connectivity, a handheld device with a wireless connection function, or another processing device connected to a wireless modem, and the wireless terminal may communicate with one or more core networks by using a radio access network (RAN, radio access network).

In this application, a base station may also be referred to as a base station device, and is a device that is deployed in a radio access network to provide a wireless communication function. The base station may have different names in different radio access systems. For example, the base station is referred to as a NodeB (NodeB) in a universal mobile telecommunications system UMTS network, the base station is referred to as an evolved NodeB (evolved NodeB, eNB or eNodeB for short) in an LTE network, and the base station may be referred to as a transmission and reception point (Transmission and Reception Point, TRP for short), a network node, or a gNodeB (g-NodeB, gNB) in a future 5G system. Details are not described herein.

The following describes an application scenario of this application. FIG. 2 is an architectural diagram of a communications system according to an embodiment of the present invention. As shown in FIG. 2, the communications system may include a terminal device and a network device, and the terminal device and the network device may communicate with each other by using the communications system. In a scenario in which a plurality of communications systems coexist, one system (for example, a second system) may need to reserve a resource at a resource location at which another system (for example, a first system) sends a certain type of signal, to avoid interference. For example, in a scenario in which an LTE system and a 5G NR system coexist and share spectrum resources, the NR system needs to reserve a resource on a downlink at a subcarrier location at which the LTE system sends a reference signal such as a CRS or a CSI-RS, in other words, needs to perform rate matching (rate-matching). The network device may send indication information to indicate resource location information used by the terminal device to perform reservation/rate matching, for example, location information of a subcarrier that needs to be reserved by the terminal device for the CRS in the LTE system.

In addition, in some scenarios, the terminal device cannot accurately determine, based on only a frequency shift V_{shift} and an antenna port quantity of the CRS, a location of a resource that needs to be reserved in the NR system. For example, when both the LTE system and the NR system use a subcarrier spacing (Subcarrier Spacing, SCS for short) of 15 kHz, subcarrier locations in the LTE system and the NR system are aligned. However, because a center subcarrier of a frequency used on the downlink of the LTE system is not used for information transmission, on two sides of a subcarrier that is of the NR system and that corresponds to the center subcarrier of the LTE system, a shift of one subcarrier exists in a correspondence between subcarriers of the NR system and subcarriers of the LTE system. Therefore, based on a location (frequency) of the LTE center subcarrier, locations of the resource that needs to be reserved in the NR system are different on two sides of the frequency of the center subcarrier, for example, shifts may be different, or the resource that needs to be reserved in the NR system has different numbers in a resource block. Alternatively, a number of a third subcarrier included in a first resource determined in a first frequency domain range and a number of a fourth subcarrier included in a first resource determined in a second frequency domain range meet the following: a remainder obtained by dividing the number of the third subcarrier by 3 is unequal to a remainder obtained by dividing the number of the fourth subcarrier by 3, or there is a difference of 1 between a remainder obtained by dividing the number of the third subcarrier by 3 and a remainder obtained by dividing the number of the fourth subcarrier by 3, that is, the remainders are different. Therefore, the network device needs to generate indication information for the difference, so that the terminal device may determine, based on the indication information, locations of the resource that needs to be reserved in different areas, to improve reliability of a determined location of the resource that needs to be reserved in the system. The following specifically describes a case in which the first resource, namely, the resource that needs to be reserved, has different locations on both the sides of the frequency of the center subcarrier (or a frequency of a first subcarrier or a location of a first subcarrier).

In this application, indicating information such as an antenna port quantity, a subcarrier quantity, a number, or bandwidth may be indicating a specific value or may be indicating an index corresponding to the value, and this is not limited in this application.

In this application, reserving a resource means that no signal is sent and/or received on the resource, where the signal includes a data signal, a reference signal, a control signal, and the like.

In this application, a location of a subcarrier may be a frequency corresponding to the subcarrier, and may be referred to as a frequency location or a location frequency, and this is not limited in this application.

In this application, that resources exist in different systems at a same frequency location may mean that the resources are aligned in the different systems. For example, RB alignment may mean that start locations (for example, start subcarriers) of RBs of two systems at a same frequency location are aligned. For example, subcarrier alignment may mean that subcarriers exist in two systems at a same frequency location.

In this application, that (a location of) a subcarrier is in bandwidth such as a BWP may mean that a frequency of the subcarrier falls within a frequency range of the BWP, in other words, the frequency range of the BWP includes the frequency of the subcarrier. Correspondingly, that (a location of) a subcarrier is outside a BWP may mean that a frequency of the subcarrier falls beyond a frequency range of the BWP, in other words, the frequency range of the BWP does not include the frequency of the subcarrier.

In this application, a shared frequency may be a frequency that may be used by a plurality of systems. For example, a frequency that may be used by LTE and NR may be referred to as a shared frequency of LTE and NR.

In this application, a resource block RB may be a physical resource block, that is, an RB relative to an entire BWP. Or the resource block may be a carrier resource block, that is, an RB relative to entire bandwidth, and this is not limited in this application.

This application discloses an information indication method, a terminal device, and a network device, to improve reliability of a determined location of a resource that needs to be reserved in a system. Details are separately described as follows.

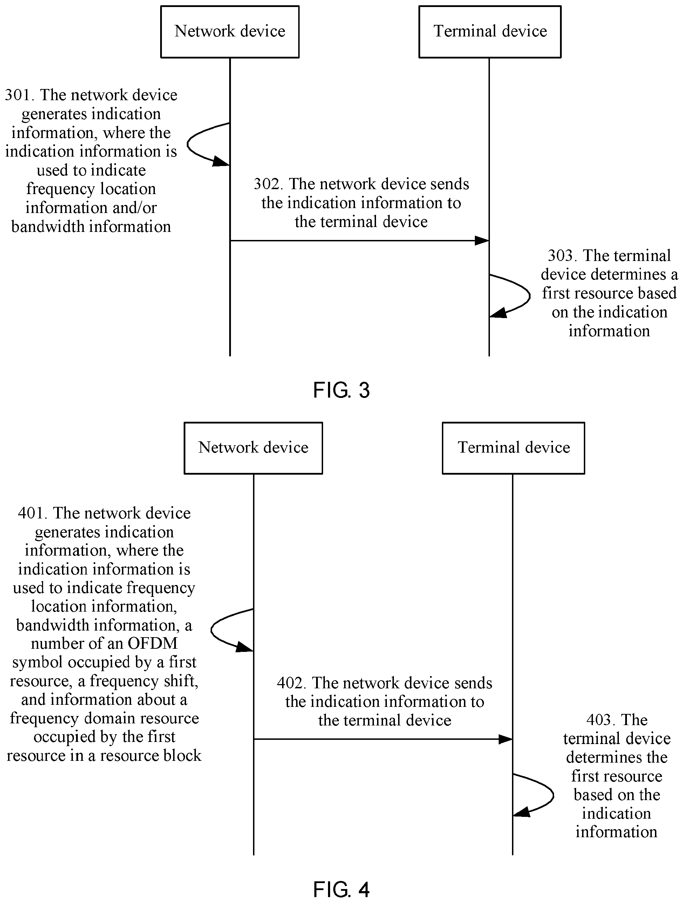

FIG. 3 is a schematic diagram of interaction of an information indication method according to an embodiment of the present invention. Specifically, as shown in FIG. 3, the information indication method in this embodiment of the present invention may include the following steps.

301. A network device generates indication information, where the indication information indicates frequency location information and/or bandwidth information.

Optionally, the frequency location information may include one of a number of a first subcarrier, an absolute radio frequency channel number such as an EARFCN (E-UTRAN Absolute Radio Frequency Channel Number) of the first subcarrier, or a first frequency. The number of the first subcarrier may be a number of a subcarrier that is of a second system such as an NR system and that corresponds to a center subcarrier of a first system such as an LTE system, and the first frequency may be a frequency of the LTE center subcarrier. Therefore, a terminal device may determine a location (frequency) of the first subcarrier based on the frequency location information.

Optionally, the bandwidth information may include one of first bandwidth, a second subcarrier quantity, a first resource block quantity, or a second resource block bitmap. The first bandwidth may be bandwidth (or an index) of the first system such as LTE, the second subcarrier quantity may be a subcarrier quantity (or an index) corresponding to the bandwidth of the first system such as LTE, the first resource block quantity may be an RB quantity (or an index index) corresponding to the bandwidth of the first system such as LTE, and the second resource block bitmap may be an RB bitmap corresponding to bandwidth of the second system such as NR. In other words, the bandwidth information may implicitly indicate a shared frequency (namely, a commonly used frequency) of systems such as LTE and NR, so that the terminal device may determine the shared frequency of systems, for example, a shared frequency of LTE and NR, based on the bandwidth information. Further, when the bandwidth information includes the resource block bitmap such as the RB bitmap, start RBs of the shared frequency need to be aligned.

Alternatively, the bandwidth information may include at least two of first location information of a first resource unit, second location information of a second resource unit, a quantity of first resource units, or a quantity of second resource units. The first resource unit and the second resource unit may be the same or different. For example, the first resource unit and/or the second resource unit may be an RB, a subcarrier, or the like, and this is not limited in this application. In other words, the indication information may further include a location (for example, a number) of a start subcarrier or RB of a shared frequency of systems and a location of an end subcarrier or RB of the shared frequency of the systems, or include a location of a start subcarrier or RB of a shared frequency of systems and a quantity of subcarriers or RBs, or include a location of an end subcarrier or RB of a shared frequency of systems and a quantity of subcarriers or RBs. In other words, the bandwidth information may explicitly indicate the shared frequency of the systems such as LTE and NR, so that the terminal device may determine the shared frequency of the systems, for example, a shared frequency of LTE and NR, based on the bandwidth information.

Optionally, the frequency location information or the bandwidth information may be alternatively preconfigured.

302. The network device sends the indication information to the terminal device.

303. The terminal device determines a first resource based on the indication information.

Optionally, the indication information may be indicate the frequency location information. The terminal device may further determine the location of the first subcarrier based on the frequency location information. Alternatively, the terminal device may determine the location of the first subcarrier based on frequency location information that is set by default. The location of the first subcarrier may be the number, the absolute radio frequency channel number, or a frequency of the first subcarrier. The first resource determined in a first frequency domain range and that determined in a second frequency domain range have different locations in a resource block (for example, a number of a third subcarrier included in the first resource that is determined in the first frequency domain range and a number of a fourth subcarrier included in the first resource that is determined in the second frequency domain range meet the following: a remainder obtained by dividing the number of the third subcarrier by 3 is unequal to a remainder obtained by dividing the number of the fourth subcarrier by 3, or there is a difference of 1 between a remainder obtained by dividing the number of the third subcarrier by 3 and a remainder obtained by dividing the number of the fourth subcarrier by 3, where details are not described again below). The first frequency domain range includes a frequency that is in second bandwidth, namely, the shared frequency, and that is lower than a frequency at the location of the first subcarrier, the second frequency domain range includes a frequency that is in the second bandwidth and that is higher than the frequency at the location of the first subcarrier, and the second bandwidth is determined based on the bandwidth information. In other words, locations (numbers, shifts, or the like) of the determined first resource in a resource block such as an RB are different on a left side and a right side of the subcarrier that is of the second system such as the NR system and that corresponds to the center subcarrier, and the first resource is not determined based on a same location (number, shift, or the like). This improves reliability of the determined to-be-reserved resource.

Further optionally, the indication information may be further indicate first information, and the first information may include information about a time domain location, for example, a number of an OFDM symbol, occupied by the first resource. For example, the number of the OFDM symbol may be {0, 1, 4, 7, 8, 11}, {2, 5, 6, 9}, {2, 5, 9}, {1, 4, 5, 8}, {0, 4, 7, 11}, {1, 4, 8}, {0, 3, 6, 7, 10}, or {3, 6, 10}. Details are not described herein. In other words, the terminal device may further determine, based on the indication information, the time domain location of the first resource that needs to be reserved, and further determine the first resource based on the time domain location and a frequency domain location that is determined based on information such as the frequency location information and/or the bandwidth information.

Optional, after the network device sends the indication information to the terminal device, the terminal device may receive the indication information from the network device, and further determine the first resource based on the indication information, where the first resource is a to-be-reserved resource. That is, the first resource is a resource that needs to be reserved. The to-be-reserved resource means that no signal is transmitted on the resource.

For example, the first system is LTE, and the second system is NR. The indication information indicates the frequency location information, so that the terminal device may determine, based on the frequency location information, the location of the first subcarrier or a location of the LTE center subcarrier, for example, the frequency or an absolute radio frequency channel number of the center subcarrier or the number of the subcarrier that is of NR and that corresponds to the center subcarrier. Further, other information such as information about the shared frequency and information indicate the location of the first resource may be set by default or may not be configured. The information indicate the frequency domain location of the first resource may include a frequency shift and an antenna port quantity, information about a frequency domain resource occupied by the first resource in a resource block and a frequency shift, a number of a subcarrier occupied by the first resource in a resource block, information about a frequency domain resource occupied by a second resource in a resource block and a frequency shift, or the like. The second resource may be a reference signal in the first system, for example, an LTE CRS. For example, the terminal device may use an entire BWP of NR as the shared frequency (for example, in a scenario in which bandwidth of LTE is greater than or equal to the BWP of the NR system, and a frequency domain location of the NR BWP is in the bandwidth of LTE). The antenna port quantity is set to any one of {1, 2, 4} by default, for example, 4, and the frequency shift is set to any one of 0 to 6 by default, for example, 0. Further optionally, the indication information may be further indicate the time domain location information of the first resource, for example, a number of an OFDM symbol, or the time domain location information may be set by default, so that the terminal device may determine the first resource based on the frequency location information and the time domain location information. Locations of the first resource in a resource block are different on a left side and a right side of the location of the center subcarrier in the shared frequency such as an entire BWP range.

In this application, that locations of a resource on a left side and a right side of a location (for example, the location of the first subcarrier or the location of the center subcarrier) are different may be that subcarrier numbers of the resource in an RB are different on the left side and the right side, or may be that manners of determining the first resource are different on the left side and the right side. For example, when the frequency shift is a frequency shift corresponding to the left side, the first resource on the right side is determined in a manner in which a frequency corresponding to one subcarrier is added to the frequency shift or 1 is added to a subcarrier number, and the first resource is determined on the left side still based on the original shift or an original subcarrier number. Correspondingly, if the frequency shift is a frequency shift corresponding to the right side, the first resource on the right side is determined based on the original shift or an original subcarrier number, and the first resource on the left side is determined in a manner in which a frequency corresponding to one subcarrier is subtracted from the frequency shift or 1 is subtracted from a subcarrier number. The left side refers to a frequency that is lower than a frequency at the location (for example, the location of the center subcarrier), and the right side refers to a frequency that is higher than the frequency at the location. Details are not described again below. In other words, in this application, the frequency shift indicated by the indication information (or the frequency shift that is set by default) may be the frequency shift on the left side, or may be the frequency shift on the right side. Specifically, whether the frequency shift is the shift on the left side or the shift on the right side may be set by default, or may be notified by the network device to the terminal device. This is not limited in this application.

For another example, the indication information indicates the bandwidth information, so that the terminal device may determine the shared frequency of LTE and NR based on the bandwidth information. Further, other information such as the frequency location information and information indicate the location of the first resource may be set by default or may not be configured. For example, it may be set by default that the subcarrier that is of NR and that corresponds to the LTE center subcarrier is outside an NR BWP, in other words, a frequency of the LTE center subcarrier falls beyond a frequency range of the BWP, or a special value such as -1 is configured for the frequency location information. In this case, the terminal device may determine the first resource based on information that is set by default and that indicates the location of the first resource. In the entire shared frequency, location of the first resource in each resource block (set of subcarrier number of the first resource in each RBs) are the same. Alternatively, it is set by default that the subcarrier that is of NR and that corresponds to the LTE center subcarrier is located at a center location of an NR BWP, and in this case, the terminal device may determine the first resource based on information that is set by default and that indicates the location of the first resource and the center location. Locations of the first resource are different on a left side and a right side of the center location. Further optionally, the indication information may be further indicate the time domain location information of the first resource, for example, a number of an OFDM symbol, or the time domain location information may be set by default, so that the terminal device may determine the first resource based on the bandwidth information and the time domain location information.

For still another example, the indication information indicates the frequency location information and the bandwidth information, so that the terminal device may determine a location of the LTE center subcarrier in NR, namely, the location of the first subcarrier, based on the frequency location information, and determine the shared frequency of LTE and NR based on the bandwidth information. Further, other information such as information indicate the location of the first resource may be set by default. In this case, the terminal device may determine the first resource based on the frequency location information and the bandwidth information. Locations of the first resource in a range of the shared frequency are different on a left side and a right side of the location of the center subcarrier. Further optionally, the indication information may be further indicate the time domain location information of the first resource, for example, a number of an OFDM symbol, or the time domain location information may be set by default, so that the terminal device may determine the first resource based on the frequency location information, the bandwidth information, and the time domain location information.

Further optionally, the terminal device may further determine the location of the resource that needs to be reserved, that is, determine the first resource based on second information including subcarrier pattern information of a resource block, for example, a number of a subcarrier occupied by the first resource in a resource block, third information including subcarrier pattern information of a resource block, for example, information about a frequency domain resource occupied by a second resource in a resource block and a frequency shift, fourth information including antenna port information and a frequency shift, fifth information including information about a frequency domain resource occupied by the first resource in a resource block and a frequency shift, or the like, that is, based on information indicate the location of the first resource. The frequency domain resource information includes at least one of a subcarrier quantity (or an index) and a subcarrier number (or an index), and the second resource may be a reference signal in the first system, for example, an LTE CRS or CSI-RS.

For example, the indication information may indicate the frequency location information and the information indicate the location of the first resource, for example, the second information, the third information, the fourth information, or the fifth information. For example, in a scenario in which bandwidth of LTE is greater than or equal to a BWP of the NR system, and a frequency domain location of the NR BWP is in the frequency domain bandwidth of LTE, the shared frequency is the BWP, the terminal device may determine the first resource based on the frequency location information and the information indicate the location of the first resource. For another example, the indication information may indicate the bandwidth information and the information indicate the location of the first resource, for example, the second information, the third information, or the fourth information. For example, in a scenario in which the frequency location information is not configured or is a special value such as -1, the terminal device may determine the first resource based on the bandwidth information and the information indicate the location of the first resource. Further optionally, the indication information may further indicate the time domain location of the first resource, for example, a number of an OFDM symbol. Details are not described herein.

In this embodiment of the present invention, the network device may indicate, based on the indication information including information such as the frequency location information and/or the bandwidth information, location information of a subcarrier that needs to be reserved in the NR system for a CRS in the LTE system, so that the terminal device may determine the location of the center subcarrier based on the frequency location information and/or determine the shared frequency of LTE and NR based on the bandwidth information, and further determine, based on information such as the location of the center subcarrier and the shared frequency, locations of the resource that needs to be reserved in different areas, thereby resolving a problem that relative locations of the CRS in an RB are inconsistent on the left side and the right side of the LTE center subcarrier because of a resource shift phenomenon caused by the center subcarrier. This improves reliability of a determined location of the resource that needs to be reserved in the system.

FIG. 4 is a schematic diagram of interaction of another information indication method according to an embodiment of the present invention. Specifically, as shown in FIG. 4, the information indication method in this embodiment of the present invention may include the following steps.

401. A network device generates indication information, where the indication information indicates frequency location information, bandwidth information, a number of an OFDM symbol occupied by a first resource, a frequency shift, and information about a frequency domain resource occupied by the first resource in a resource block.

402. The network device sends the indication information to a terminal device.

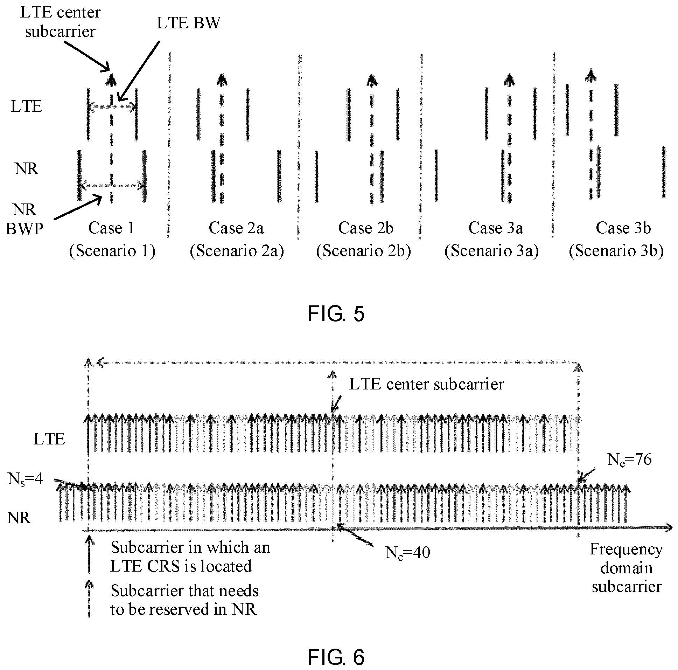

In this application, there are the following several cases for a location of a first subcarrier (or a location of an LTE center subcarrier) relative to NR bandwidth such as a BWP: The location of the first subcarrier is in the NR BWP, and the location of the first subcarrier is outside the NR BWP. As shown in FIG. 5, when the location of the first subcarrier is in the NR BWP, there are two scenarios: Case 1 (LTE BW is included in the NR BWP) and Case 2 (LTE BW partially overlaps the NR BWP, and a frequency of the LTE center subcarrier or a frequency of the first subcarrier is in the NR BWP). Case 2 is further divided into Case 2a and Case 2b. When the location of the first subcarrier is outside the NR BWP, there is one scenario: Case 3 (LTE BW partially overlaps the NR BWP, and a frequency of the LTE center subcarrier or a frequency of the first subcarrier is outside the NR BWP). Case 3 is further divided into two cases: Case 3a and Case 3b.

Optionally, the frequency location information may be location information of the first subcarrier, for example, may include a number of the first subcarrier (for example, a subcarrier that is of an NR system and that corresponds to the LTE center subcarrier), an absolute radio frequency channel number corresponding to the first subcarrier, or a frequency of the first subcarrier, namely, a first frequency. For example, if the first subcarrier is in the BWP, the frequency location information may include the number of the first subcarrier. If the first subcarrier is outside the BWP, the first subcarrier cannot correspond to a subcarrier number in the BWP. In this case, a field of the frequency location information may be set to be empty (may not be configured), or a default value such as -1 may be configured for the field. Alternatively, the number of the first subcarrier is a subcarrier number in entire bandwidth, but is not a subcarrier number in the BWP. For example, the BWP is 0 to 71 (subcarriers), and the frequency location information may be indicated as 76 (or any other value beyond the range of 0 to 71) to indicate that the first subcarrier is outside the BWP.

Optionally, the bandwidth information may include a bandwidth value of LTE, for example, is indicated by using one of {1.4, 3, 5, 10, 15, 20} MHz. Alternatively, the bandwidth information may include an RB quantity, for example, is indicated by using one of {6, 15, 25, 50, 75, 100} RBs. Alternatively, the bandwidth information may include a subcarrier quantity, for example, is indicated by using one of {72, 180, 300, 600, 900, 1200} subcarriers. Alternatively, the bandwidth information may include index of one of the foregoing three values for indication. Because there are only six types of bandwidth of the LTE system, a method for indicating the bandwidth of the LTE system may effectively reduce a quantity of bits that need to be used for the indication information, so that system overheads are reduced. Alternatively, the bandwidth information may include an NR downlink BWP RB bitmap (bitmap) (for example, the method may be applied to a case in which start RBs of an overlapping bandwidth part of LTE and NR are aligned), or the like. This is not limited in this application. For example, y1 indicates that the RB is a resource that needs to be reserved, and y2 indicates that the RB is a resource that does not need to be reserved. For example, typical values of y1 and y2 may be 1 and 0. 1 indicates that a resource needs to be reserved or that there is a resource, for example, a subcarrier, that needs to be reserved. 0 indicates that no resource needs to be reserved or that there is no resource, for example, no subcarrier, that needs to be reserved.

Alternatively, the bandwidth information may include at least two of first location information of a first resource unit, second location information of a second resource unit, a quantity of first resource units, or a quantity of second resource units, that is, information about a shared frequency. For example, the bandwidth information may include a start subcarrier/RB + an end subcarrier/RB, or may include a start subcarrier/RB + a quantity of subcarriers/RBs, or may include an end subcarrier/RB + a quantity of subcarriers/RBs ("+" may represent "and"), or may include start and end subcarriers/RBs + a quantity of subcarriers/RBs. Units of the first resource unit and the second resource unit may be the same or different. For example, the two units are RBs or subcarriers, or one unit is an RB and the other unit is a subcarrier. This is not limited in this application. Further, if the start/end RB is included, RBs need to be aligned at the start/end. If there are RBs at the start and the end, at least start RBs or end RBs need to be aligned (the start RBs are aligned and/or the end RBs are aligned). If either start RBs or end RBs are aligned, a user needs to be notified whether the aligned RBs are the start RBs or the end RBs, or the aligned RBs may be set by default, for example, it is set by default that the start RBs or the end RBs are aligned.

It should be understood that in this application, "bandwidth information" is a term indicate the bandwidth information. For example, "bandwidth information" may represent a value. In another scenario, "bandwidth information" may have another name. This is not limited in this application.

Optionally, the information about the frequency domain resource occupied by the first resource may include at least one of a subcarrier quantity and a subcarrier number. For example, the subcarrier quantity is either 2 or 4, or an index of a subcarrier quantity may be notified. For example, numbers of subcarriers in a resource block may be one of [0, 6], [1, 7], [2, 8], [3, 9], [4, 10], [5, 11], [0, 3, 6, 9], [1, 4, 7, 10], and [2, 5, 8, 11], or an index of the set may be notified. When the subcarrier quantity is 2, a corresponding set of numbers of subcarriers in a resource block is one of [0, 6], [1, 7], [2, 8], [3, 9], [4, 10], and [5, 11], and a specifically indicated set may be specified by a base station or may be determined by default. When the subcarrier quantity is 4, a corresponding set of numbers of subcarriers in a resource block is one of [0, 3, 6, 9], [1, 4, 7, 10], and [2, 5, 8, 11], and a specifically indicated set may be specified by a base station or may be determined by default.

Optionally, the frequency shift may be a quantity of shift subcarriers, a shift of another granularity, a shift frequency value, or the like, and this is not limited in this application.

Optionally, the indication information may be further indicate time domain location information of the first resource, for example, a number of an OFDM symbol. Further, the terminal device may determine the first resource based on a time domain location and a frequency domain location that is determined based on information such as the frequency location information, the bandwidth information, the frequency shift, and the information about the frequency domain resource occupied by the first resource in a resource block, to further improve reliability of the determined first resource.

403. The terminal device determines the first resource based on the indication information.

Specifically, after the network device sends the indication information to the terminal device, the terminal device may receive the indication information sent by the network device, and further determine the to-be-reserved first resource based on the indication information.

Optionally, after receiving the indication information, when determining the first resource, the terminal device may determine locations of the first resource in different areas by adjusting a frequency shift. Specifically, it is assumed that the terminal device determines the location of the first subcarrier (namely, a location of the subcarrier that is of the NR system and that corresponds to the LTE center subcarrier) by using the frequency location information, to obtain the number N_{c} of the first subcarrier and a number N_{RB} of an RB in which the first subcarrier is located (the subcarrier number and the RB number may be a subcarrier number and an RB number in the BWP or may be a subcarrier number and an RB number in the entire bandwidth). Further, the terminal device may determine the shared frequency by using the bandwidth information and BWP information of the terminal device (the bandwidth information indicates only bandwidth information of LTE or RB bitmap information of NR), or directly determine the shared frequency by using the bandwidth information (the bandwidth information indicates the information about the shared frequency), to obtain a start subcarrier number Nₛ and an end subcarrier number Nₑ of the shared frequency. If the location of the first subcarrier is outside the BWP, a frequency shift used from Nₛ to Nₑ is V_{shift}, _{NR}=V_{shift}, where V_{shift} may be the frequency shift indicated by the indication information; or if the location of the first subcarrier is in the NR BWP, a frequency shift used from the start subcarrier Nₛ to the subcarrier N_{c} is V_{shift}, _{NR}=V_{shift}, and a frequency shift used from a subcarrier N_{c}+1 to the end subcarrier Ne is Vshift, _{NR}=V_{shift}+1, as shown in Table 1 (in this scenario, the frequency shift indicated by the indication information may be a frequency shift on a left side). Alternatively, the frequency shift may be a frequency shift on a right side. To be specific, if the location of the first subcarrier is in the NR BWP, a frequency shift from the start subcarrier Nₛ to the subcarrier N_{c} is V_{shift}, _{NR}=V_{shift}-1, and a frequency shift from a subcarrier N_{c}+1 to the end subcarrier Nₑ is V_{shift}, _{NR}=V_{shift}; or if the location of the first subcarrier is outside the BWP, a frequency shift from Nₛ to Ne is V_{shift}, _{NR}=V_{shift}-1. BWP information of NR may be configured in a system message in the NR system.

**Table 1**

| Location of N_{c} in the BWP | Start subcarrier and end subcarrier | NR frequency shift V_{shift}, NR |
|---|---|---|
| N_{c} is in the BWP | From Nₛ to N_{c} | V_{shift} |
| | From Nc+1 to Ne | V_{shift}+1 |
| N_{c} is outside the BWP | From Nₛ to Ne | V_{shift} |

When determining the first resource, the terminal device obtains, based on the information about the frequency domain resource occupied by the first resource in a resource block, the start subcarrier number Nₛ of the shared frequency, and V_{shift}, _{NR}, a number of a subcarrier that needs to be reserved. For example, the terminal device may determine, based on the information about the frequency domain resource occupied by the first resource in a resource block and the frequency shift V_{shift}, _{NR}, a set of numbers of subcarriers that need to be reserved in each resource block, and then obtain, based on the start subcarrier number of the shared frequency, a number of a subcarrier that finally needs to be reserved (a subcarrier number in the entire bandwidth, for example, a subcarrier number in the BWP).

For example, as shown in FIG. 6, a quantity of subcarriers occupied by the first resource in a resource block is 4, corresponding numbers of occupied subcarriers are [0, 3, 6, 9] (or it may be indicated that numbers of subcarriers occupied by the first resource in a resource block are [0, 3, 6, 9]), V_{shift}=4, the location of the subcarrier that is of the NR system and that corresponds to the center subcarrier of the LTE system is N_{c}=40, N_{c} is in the BWP used in the NR system, the start subcarrier of the shared frequency of LTE and NR is Nₛ=4, the end subcarrier of the shared frequency of LTE and NR is Nₑ=76. In this case, in a shared frequency part on a left side of N_{c}, that is, subcarriers numbered 4 to 40, V_{shift}, _{NR}=4, and a number of the first resource in each resource block is obtained as follows: V_{shift}, _{NR}=4 is added to each number in [0, 3, 6, 9] to obtain a number, and then a modulo-12 operation is performed on the number to obtain [4, 7, 10, 1]. In a shared frequency part on a right side of N_{c}, that is, subcarriers numbered 41 to 76, V_{shift}, _{NR}=V_{shift}+1=5, and a number of the first resource in each resource block is obtained as follows: V_{shift}, _{NR}=5 is added to each number in [0, 3, 6, 9] to obtain a number, and then a modulo-12 operation is performed on the number to obtain [5, 8, 11, 2]. Then, it may be determined, based on the start subcarrier Nₛ=4 of the shared frequency and a location of each subcarrier in the NR system in a resource block, that numbers of subcarriers that need to be reserved on the left side of N_{c} are [4, 7, 10, 13, ..., 28, 31, 34, 37] (numbers in the BWP), and numbers of subcarriers that need to be reserved on the right side of N_{c} are [41, 44, 47, ..., 65, 68, 71, 74].

It should be understood that the terminal device may determine the first resource in different manners. However, during determining of a frequency shift, when the location of the first subcarrier is in the BWP, frequency shifts are different on the left side and the right side of the location of the center subcarrier, and a frequency shift on the right side is one subcarrier larger than that on the left side; or when the location of the first subcarrier is outside the BWP, there is only one shift mode, in other words, a frequency shift is always the frequency shift included in the indication information.

Optionally, the terminal device may directly determine the first resource by using a subcarrier number shift. Specifically, when the first subcarrier is in the NR BWP, the terminal device may obtain, based on information about frequency domain occupied by the first resource in a resource block and V_{shift} information, a number of a subcarrier that needs to be reserved in a resource block (a number in a resource block). For example, the terminal device may obtain, based on a quantity of subcarriers (numbers of subcarriers) occupied by the first resource in a resource block and the frequency shift V_{shift}, number information of the subcarriers occupied by the first resource in a resource block, and then determine, based on the start subcarrier number Nₛ of the shared frequency, that a temporary subcarrier number of the first resource in the shared frequency part is k_{NR} (a subcarrier number in the entire bandwidth, for example, a subcarrier number in the BWP). In this case, a subcarrier number of the first resource in the shared frequency part on the left side of the location N_{c} of the center subcarrier is k_{NR}, and a subcarrier number of the first resource in the shared frequency part on the right side of N_{c} is k_{NR}+1. When the first subcarrier is outside the NR BWP, a subcarrier number of the first resource is k_{NR}. This is shown in Table 2. In this case, k_{NR} is a function of a resource block number, a number of a subcarrier occupied by the first resource in each resource block, and a frequency shift.

**Table 2**

| Location of N_{c} in the BWP | Start subcarrier and end subcarrier | Location of a to-be-reserved resource |
|---|---|---|
| N_{c} is in the BWP | From Nₛ to N_{c} | k_{NR} |
| | From Nc+1 to Ne | kNR+1 |
| N_{c} is outside the BWP | From Nₛ to Ne | k_{NR} |

It should be understood that the terminal device may determine the first resource in different manners. However, during determining of a finally to-be-reserved resource, when the location of the first subcarrier is in the BWP, methods for calculating numbers of subcarriers on the left side and the right side of the location of the center subcarrier are different, and a subcarrier number on the right side is 1 larger than a corresponding subcarrier number on the left side, in other words, a frequency shift on the right side is one subcarrier larger than that on the left side. In other words, if a calculation formula for the left side is k_{NR}, a calculation formula for the right side is k_{NR}+1. When the location of the first subcarrier is outside the BWP, there is only one calculation formula k_{NR}.

In this embodiment of the present invention, the network device may indicate, based on the indication information including the frequency location information, the bandwidth information, the time domain location information, the frequency shift, and information about a frequency domain location occupied by the first resource in a resource block, location information of a subcarrier that needs to be reserved in the NR system for a CRS in the LTE system, so that the terminal device may determine the location of the center subcarrier based on the frequency location information, determine the shared frequency of LTE and NR based on the bandwidth information, and further determine, based on information such as the frequency shift and the information about the frequency domain location occupied by the first resource in a resource block, locations of the resource that needs to be reserved on the left side and the right side of the location of the center subcarrier, that is, in different areas, thereby resolving a problem that relative locations of the CRS in an RB are inconsistent on the left side and the right side of the LTE center subcarrier because of a resource shift phenomenon caused by the center subcarrier. This improves reliability of a determined location of the resource that needs to be reserved in the system.

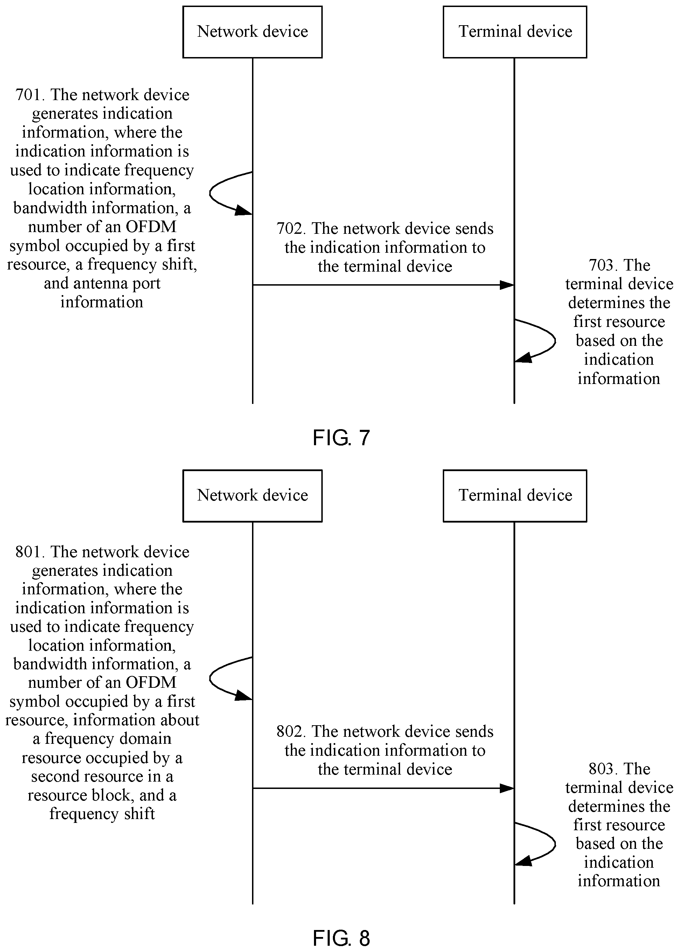

FIG. 7 is a schematic diagram of interaction of another information indication method according to an embodiment of the present invention. Specifically, as shown in FIG. 7, the information indication method in this embodiment of the present invention may include the following steps.

701. A network device generates indication information, where the indication information indicates frequency location information, bandwidth information, a number of an OFDM symbol occupied by a first resource, a frequency shift, and antenna port information.

702. The network device sends the indication information to a terminal device.

In this application, there are the following several cases for a location of a first subcarrier (or a location of an LTE center subcarrier) relative to NR bandwidth such as a BWP: The location of the first subcarrier is in the NR BWP, and the location of the first subcarrier is outside the NR BWP. As shown in FIG. 5, when the location of the first subcarrier is in the NR BWP, there are two scenarios: Case 1 (LTE BW is included in the NR BWP) and Case 2 (LTE BW partially overlaps the NR BWP, and a frequency of the LTE center subcarrier or a frequency of the first subcarrier is in the NR BWP). Case 2 is further divided into Case 2a and Case 2b. When the location of the first subcarrier is outside the NR BWP, there are two scenarios: Case 3 (LTE BW partially overlaps the NR BWP, and a frequency of the LTE center subcarrier or a frequency of the first subcarrier is outside the NR BWP). Case 3 is further divided into two cases: Case 3a and Case 3b.

Optionally, the frequency location information may be location information of the first subcarrier, for example, may include a number of the first subcarrier (for example, a subcarrier that is of an NR system and that corresponds to the LTE center subcarrier), an absolute radio frequency channel number corresponding to the first subcarrier, or a frequency of the first subcarrier, namely, a first frequency. For example, if the first subcarrier is in the BWP, the frequency location information may include the number of the first subcarrier. If the first subcarrier is outside the BWP, the first subcarrier cannot correspond to a subcarrier number in the BWP. In this case, a field of the frequency location information may be set to be empty (may not be configured), or a default value such as -1 may be configured for the field. Alternatively, the number of the first subcarrier is a subcarrier number in entire bandwidth, but is not a subcarrier number in the BWP. For example, the BWP is 0 to 71 (subcarriers), and the frequency location information may be indicated as 76 (or any other value beyond the range of 0 to 71) to indicate that the first subcarrier is outside the BWP.

Optionally, the bandwidth information may include a bandwidth value of LTE, for example, is indicated by using one of {1.4, 3, 5, 10, 15, 20} MHz. Alternatively, the bandwidth information may include an RB quantity, for example, is indicated by using one of {6, 15, 25, 50, 75, 100} RBs. Alternatively, the bandwidth information may include a subcarrier quantity, for example, is indicated by using one of {72, 180, 300, 600, 900, 1200} subcarriers. Alternatively, the bandwidth information may include indexes of the foregoing three values for indication. Because there are only six types of bandwidth of the LTE system, a method for indicating the bandwidth of the LTE system may effectively reduce a quantity of bits that need to be used for the indication information, so that system overheads are reduced. Alternatively, the bandwidth information may include an NR downlink BWP RB bitmap (bitmap)

(for example, the method may be applied to a case in which start RBs of an overlapping bandwidth part of LTE and NR are aligned), or the like. This is not limited in this application. For example, y1 indicates that the RB is a resource that needs to be reserved, and y2 indicates that the RB is a resource that does not need to be reserved. For example, typical values of y1 and y2 may be 1 and 0. 1 indicates that a resource needs to be reserved or that there is a resource, for example, a subcarrier, that needs to be reserved. 0 indicates that no resource needs to be reserved or that there is no resource, for example, no subcarrier, that needs to be reserved.

Alternatively, the bandwidth information may include at least two of first location information of a first resource unit, second location information of a second resource unit, a quantity of first resource units, or a quantity of second resource units, that is, information about a shared frequency. For example, the bandwidth information may include a start subcarrier/RB + an end subcarrier/RB, or may include a start subcarrier/RB + a quantity of subcarriers/RBs, or may include an end subcarrier/RB + a quantity of subcarriers/RBs, or may include start and end subcarriers/RBs + a quantity of subcarriers/RBs. Units of the first resource unit and the second resource unit may be the same or different. For example, the two units are RBs or subcarriers, or one unit is an RB and the other unit is a subcarrier. This is not limited in this application. Further, if the start/end RB is included, RBs need to be aligned at the start/end. If there are RBs at the start and the end, at least start RBs or end RBs need to be aligned (the start RBs are aligned and/or the end RBs are aligned). If either start RBs or end RBs are aligned, a user needs to be notified whether the aligned RBs are the start RBs or the end RBs, or the aligned RBs may be set by default, for example, it is set by default that the start RBs or the end RBs are aligned.

It should be understood that in this application, "bandwidth information" is a term indicate the bandwidth information. For example, "bandwidth information" may represent a value. In another scenario, "bandwidth information" may have another name. This is not limited in this application.

Optionally, the antenna port information may include a port port quantity, for example, is indicated by using {1, 2, 4} or an index of a port quantity.

Optionally, the frequency shift may be a quantity of shift subcarriers, a shift of another granularity, a shift frequency value, or the like, and this is not limited in this application.

Optionally, the indication information may be further indicate time domain information of the first resource, for example, a number of an OFDM symbol. Further, the terminal device may determine the first resource based on a time domain location and a frequency domain location that is determined based on information such as the frequency location information, the bandwidth information, the frequency shift, and the antenna port information, to further improve reliability of the determined first resource.

703. The terminal device determines the first resource based on the indication information.

Specifically, after the network device sends the indication information to the terminal device, the terminal device may receive the indication information sent by the network device, and further determine the to-be-reserved first resource based on the indication information.

Optionally, after receiving the indication information, when determining the first resource, the terminal device may determine locations of the first resource in different areas by adjusting a frequency shift. Specifically, it is assumed that the terminal device determines the location of the first subcarrier (namely, a location of the subcarrier that is of the NR system and that corresponds to the LTE center subcarrier) by using the frequency location information, to obtain the number N_{c} of the first subcarrier and a number N_{RB} of an RB in which the first subcarrier is located (the subcarrier number and the RB number may be a subcarrier number and an RB number in the BWP or may be a subcarrier number and an RB number in the entire bandwidth). Further, the terminal device may determine the shared frequency by using the bandwidth information and BWP information of the terminal device (the bandwidth information indicates only bandwidth information of LTE or RB bitmap information of NR), or directly determine the shared frequency by using the bandwidth information (the bandwidth information indicates the information about the shared frequency), to obtain a start subcarrier number Nₛ and an end subcarrier number Nₑ of the shared frequency. If the location of the first subcarrier is outside the BWP, a frequency shift from Nₛ to Ne is V_{shift}, _{NR}=V_{shift}; or if the location of the first subcarrier is in the NR BWP, a frequency shift from the start subcarrier Nₛ to the subcarrier N_{c} is V_{shift}, _{NR}=V_{shift}, and a frequency shift from a subcarrier Nc+1 to the end subcarrier Ne is V_{shift}, _{NR}=V_{shift}+1, as shown in Table 1 (in this scenario, the frequency shift indicated by the indication information may be a frequency shift on a left side). Alternatively, the frequency shift may be a frequency shift on the right side. To be specific, if the location of the first subcarrier is in the NR BWP, a frequency shift from the start subcarrier Nₛ to the subcarrier N_{c} is V_{shift}, _{NR}=V_{shift}-1, and a frequency shift from a subcarrier Nc+1 to the end subcarrier Ne is V_{shift}, _{NR}=V_{shift}, where details are not described herein; or if the location of the first subcarrier is outside the BWP, a frequency shift from Nₛ to Ne is V_{shift}, _{NR}=V_{shift}-1. BWP information of NR may be configured in a system message in the NR system.

When determining the first resource, the terminal device obtains, based on the antenna port quantity and V_{shift}, _{NR}, a number of a subcarrier that needs to be reserved. For example, the terminal device may obtain third subcarrier number information k_{Temp} (a subcarrier number in the entire bandwidth, for example, a subcarrier number in the BWP) based on the antenna port quantity and the frequency shift V_{shift}, _{NR} and according to a formula used to determine CRS subcarrier location information in the LTE system, for example (in this case, time domain information, that is, a number of an OFDM symbol, in the LTE system may be 0 by default, and all frequency shifts are represented by using V_{shift}), and then obtain an initial frequency shift Nᵣₑ based on the location of the center subcarrier and the bandwidth information. In this case, location information of a finally to-be-reserved resource, for example, the number k_{NR} of the first resource (a subcarrier number in the entire bandwidth, for example, a subcarrier number in the BWP) is k_{NR}=k_{Temp}+Nᵣₑ. For example, as shown in FIG. 6, it is assumed that antenna port information such as "antenna ports" is 4, V_{shift}=0, the location of the subcarrier that is of the NR system and that corresponds to the center subcarrier of the LTE system is N_{c}=40, N_{c} is in the BWP allocated by the NR system to a downlink user, the start subcarrier of the shared frequency of LTE and NR is Nₛ=4, the end subcarrier of the shared frequency of LTE and NR is Nₑ=76. In this case, in a shared frequency part on a left side of N_{c}, that is, subcarriers numbered 4 to 40, V_{shift}, _{NR}=0, and subcarrier locations obtained according to a method for calculating a CRS frequency domain location in LTE (the time domain information, that is, a number of an OFDM symbol, in the LTE system is 0 by default, where this default manner is applied to the following, details are not described again, and a used frequency shift is V_{shift}, _{NR}) are [0, 3, 6, 9, ..., 24, 27, 30, 33]. In a shared frequency part on a right side of N_{c}, that is, subcarriers numbered 41 to 76, V_{shift, NR}=V_{shift}+1 =1, and subcarrier locations obtained according to the method for calculating a CRS frequency domain location in LTE are [37, 40, 43, ..., 61, 64, 67, 70]. In this case, an initial frequency shift is four subcarriers. Subcarriers that finally need to be reserved in NR on the left side of N_{c} are obtained by adding the initial frequency shift 4 to the subcarrier locations obtained according to the method for calculating a CRS location in LTE, and are [4, 7, 10, 13, ..., 28, 31, 34, 37]; and subcarriers that need to be reserved on the right side of N_{c} are obtained by adding the initial frequency shift 4 to the subcarrier locations calculated according to the method for calculating a CRS location in LTE, and locations of the subcarriers are [41, 44, 47, ..., 65, 68, 71, 74].

Alternatively, the terminal device may reserve a resource based on a subcarrier number in the entire bandwidth such as the BWP. For example, when the antenna port quantity is 1, a corresponding quantity of subcarriers occupied by the first resource in a resource block is 2, or numbers of subcarriers occupied by the first resource in a resource block are [0, 6]; or when the antenna port quantity is 2 or 4, a corresponding quantity of subcarriers occupied by the first resource in a resource block is 4, or numbers of subcarriers occupied by the first resource in a resource block are [0, 3, 6, 9]. Then a subcarrier number of the first resource (the number is a subcarrier number in the entire bandwidth, for example, a number in the BWP) is calculated based on other parameters and with reference to the related description in the embodiment shown in FIG. 4. Details are not described herein again.

It should be understood that the terminal device may determine the first resource in different manners. However, during determining of a frequency shift, when the location of the first subcarrier is in the BWP, frequency shifts are different on the left side and the right side of the location of the center subcarrier, and a frequency shift on the right side is one subcarrier larger than that on the left side; or when the location of the first subcarrier is outside the BWP, there is only one shift mode, in other words, a frequency shift is always the frequency shift included in the indication information.

Optionally, the terminal device may directly determine the first resource by using a subcarrier shift. Specifically, when the first subcarrier is in the NR BWP, the terminal device may obtain, based on the antenna port quantity and V_{shift} information, a number of a subcarrier that needs to be reserved. For example, the terminal device may obtain, based on the antenna port quantity and the frequency shift and according to the method for calculating CRS frequency domain location information in LTE (in this case, time domain information, that is, a number of an OFDM symbol, in the LTE system may be 0 by default, and all frequency shifts are represented by using V_{shift}), number information k_{LTE} of a subcarrier in which a CRS in the LTE system is located, and then obtain an initial frequency shift Nᵣₑ based on the location of the center subcarrier and the bandwidth information. In this case, the number k_{NR} of the first resource, that is, a location of a finally to-be-reserved resource, in a shared frequency part on a left side of N_{c} is k_{NR}=k_{LTE}+Nᵣₑ, and k_{NR} in a shared frequency part on a right side of N_{c} is k_{NR}=k_{LTE}+Nᵣₑ+1. When the first subcarrier is outside the NR BWP, the number k_{NR} of the first resource, that is, a location of a finally to-be-reserved resource is k_{NR}=k_{LTE}+Nᵣₑ, as shown in Table 2. In this case, k_{NR} is a function variable of an antenna port quantity and a frequency shift.

Alternatively, the terminal device may reserve a resource based on a subcarrier number in the entire bandwidth such as the BWP. For example, when the antenna port quantity is 1, a corresponding quantity of subcarriers occupied by the first resource in a resource block is 2, or numbers of subcarriers occupied by the first resource in a resource block are [0, 6]; or when the antenna port quantity is 2 or 4, a corresponding quantity of subcarriers occupied by the first resource in a resource block is 4, or numbers of subcarriers occupied by the first resource in a resource block are [0, 3, 6, 9]. Then a subcarrier number of the first resource (a subcarrier number in the entire bandwidth such as the BWP) is calculated based on other parameters and with reference to the related description in the embodiment shown in FIG. 4. Details are not described herein again.

It should be understood that the terminal device may determine the first resource in different manners. However, during determining of a finally to-be-reserved resource, when the location of the first subcarrier is in the BWP, methods for calculating numbers of subcarriers on the left side and the right side of the location of the center subcarrier are different, and a subcarrier number on the right side is 1 larger than a corresponding subcarrier number on the left side, in other words, a frequency shift on the right side is one subcarrier larger than that on the left side. In other words, if a calculation formula for the left side is k_{NR}, a calculation formula for the right side is k_{NR}+1. When the location of the first subcarrier is outside the BWP, there is only one calculation formula k_{NR}.

In this embodiment of the present invention, the network device may indicate, based on the indication information including the frequency location information, the bandwidth information, the time domain location information, the frequency shift, and the antenna port information, location information of a subcarrier that needs to be reserved in the NR system for a CRS in the LTE system, so that the terminal device may determine the location of the center subcarrier based on the frequency location information, determine the shared frequency of LTE and NR based on the bandwidth information, and further determine, based on information such as the frequency shift and the antenna port information, locations of the resource that needs to be reserved on the left side and the right side of the location of the center subcarrier, that is, in different areas, thereby resolving a problem that relative locations of the CRS in an RB are inconsistent on the left side and the right side of the LTE center subcarrier because of a resource shift phenomenon caused by the center subcarrier. This improves reliability of a determined location of the resource that needs to be reserved in the system.

FIG. 8 is a schematic diagram of interaction of still another information indication method according to an embodiment of the present invention. Specifically, as shown in FIG. 8, the information indication method in this embodiment of the present invention may include the following steps.

801. A network device generates indication information, where the indication information indicates frequency location information, bandwidth information, a number of an OFDM symbol occupied by a first resource, information about a frequency domain resource occupied by a second resource in a resource block, and a frequency shift.

The resource information may include at least one of a subcarrier quantity (or an index) and a subcarrier number. The second resource may be a reference signal in a first system, for example, an LTE CRS.

Optionally, the information about the resource occupied by the second resource in a resource block may be information about a resource occupied by the second resource (for example, a CRS) in each RB. For example, the resource information may include a subcarrier quantity {2, 4} or an index of a subcarrier quantity, so that the resource information is indicated by using the subcarrier quantity or the index. When the subcarrier quantity is 2, corresponding subcarrier numbers may be one of [0, 6], [1, 7], [2, 8], [3, 9], [4, 10], and [5, 11]. When the subcarrier quantity is 4, corresponding subcarrier numbers are one of [0, 3, 6, 9], [1, 4, 7, 10], and [2, 5, 8, 11] (in this case, the numbers are subcarrier numbers in an RB). Alternatively, the resource information may be indicated by indicating an index of a subcarrier quantity. It should be understood that numbers such as [0, 6], [0, 3, 6, 9], [1, 7], or [1, 4, 7, 10] are subcarrier numbers in an RB.

Specifically, for descriptions of the frequency location information, the bandwidth information, the frequency shift, time domain location information, and the like, refer to the related description of the frequency location information, the bandwidth information, the frequency shift, and the time domain location information in the foregoing embodiments corresponding to FIG. 3 and FIG. 4. Details are not described herein again.

802. The network device sends the indication information to a terminal device.

803. The terminal device determines the first resource based on the indication information.

Specifically, after the network device sends the indication information to the terminal device, the terminal device may receive the indication information sent by the network device, and further determine the to-be-reserved first resource based on the indication information.

Optionally, the information about the frequency domain resource occupied by the second resource in a resource block, for example, subcarrier pattern information of an RB, may indicate information on a left side of a location of a center subcarrier, or may indicate information on a right side of a location of the center subcarrier, and this is not limited in this application. The following uses, as an example for description, subcarrier pattern information that is of an RB and that indicates the information on the left side of the location of the center subcarrier. When determining the first resource, the terminal device may obtain, by using a location of a first subcarrier (namely, a location of a subcarrier that is of an NR system and that corresponds to the LTE center subcarrier), a number N_{c} of the first subcarrier and a number N_{RB} of an RB in which the first subcarrier is located (the subcarrier number may be a subcarrier number in a BWP or may be a subcarrier number in entire bandwidth). Further, the terminal device may determine a shared frequency by using the bandwidth information and BWP information of the terminal device, or directly determine the shared frequency by using the bandwidth information, to obtain a start subcarrier number Nₛ and an end subcarrier number Nₑ. Details are not described herein again.

Further, if N_{c} is in the BWP, for subcarriers Nₛ to N_{c}, the terminal device may reserve a resource based on a location of each subcarrier in an RB, a subcarrier pattern of the RB, and a shift. For example, if a subcarrier number in the subcarrier pattern of the RB is k, the terminal device determines, as a to-be-reserved resource, a subcarrier numbered (k+V_{shift}) mod 12 in each RB, in other words, a subcarrier number of a to-be-reserved resource in each RB (the number is a number of a subcarrier in each RB) is (k+V_{shift}) mod 12. For subcarriers N_{c}+1 to Nₑ, the terminal device determines a to-be-reserved resource based on a specific location of each subcarrier in an RB, a subcarrier pattern of the RB, and a corresponding frequency shift. For example, if a subcarrier number in the subcarrier pattern of the RB is k, the terminal device determines, as a to-be-reserved resource, a subcarrier numbered (k+V_{shift}+1) mod 12 in each RB, in other words, a subcarrier number of a to-be-reserved resource in each RB (the number is a number of a subcarrier in each RB) is (k+V_{shift}+1) mod 12. If N_{c} is outside the BWP, for each subcarrier in the shared frequency, the terminal device determines a to-be-reserved resource based on a specific location of the subcarrier in an RB, a subcarrier pattern of the RB, and a corresponding frequency shift. For example, if a subcarrier number in the subcarrier pattern of the RB is k, the terminal device determines, as a to-be-reserved resource, a subcarrier number (k+V_{shift}) mod 12 in each RB, in other words, a subcarrier number of a to-be-reserved resource in each RB (the number is a number of a subcarrier in each RB) is (k+V_{shift}) mod 12, where mod is a modulo operation. Alternatively, information about a frequency domain resource occupied by the first resource in a resource block may be determined based on the information about the frequency domain resource occupied by the second resource in a resource block, location information of the center subcarrier, and the bandwidth information. Then a subcarrier number of the first resource (a subcarrier number in the entire bandwidth such as the BWP) is calculated based on the information about the frequency domain resource occupied by the first resource in a resource block, the frequency shift, the frequency location informaiton, the bandwidth information, and the like and with reference to the description in the embodiment shown in FIG. 4. Details are not described herein again.

Optionally, if the bandwidth information includes a start RB number and an end RB number such as RB IDs, start RBs of a shared frequency of LTE and NR are aligned, and a resource waste may occur, in other words, several additional subcarriers may be reserved. For example, if the start RB number and the end RB number are respectively N_{RBs} and N_{RBe}, a number N_{c} of a first subcarrier and a number N_{RBc} of an RB in which the first subcarrier is located (the subcarrier number may be a subcarrier number in a BWP or may be a subcarrier number in entire bandwidth) may be obtained by using a location of the first subcarrier (a location of a subcarrier that is of an NR system and that corresponds to the LTE center subcarrier). Further, it may be learned, by using the start RB number and the end RB number, that a start subcarrier number and an end subcarrier number are respectively 12*N_{RBs} and 12*N_{RBe}+11, and the terminal device may further determine the first resource in a range of 12*N_{RBs} to 12*N_{RBe}+11 depending on whether the first subcarrier N_{c} is within or outside the BWP. A determining manner is similar to that in the foregoing method, and details are not described herein again.

Optionally, if the bandwidth information includes an RB bitmap, the terminal device may obtain, by using bitmap information, the first RB number and the last RB number corresponding to y1, that is, a start RB number and an end RB number, which, for example, are respectively N_{RBs} and N_{RBe}. Further, the terminal device may determine the first resource in a range of N_{RBs} to N_{RBe} depending on whether the first subcarrier N_{c} is within or outside a BWP. A determining manner is similar to that in the foregoing method, and details are not described herein again. Further optionally, the indication information may be further indicate time domain information of the first resource, for example, a number of an OFDM symbol. Further, the terminal device may determine the first resource based on a time domain location and a frequency domain location that is determined based on information such as the frequency location information, the bandwidth information, the information about the resource occupied by the second resource in a resource block, and the frequency shift, to further improve reliability of the determined first resource.

In this embodiment of the present invention, the network device may indicate, based on the indication information including the frequency location information, the bandwidth information, the time domain location information, the information about the resource occupied by the second resource in a resource block, and the frequency shift, location information of a subcarrier that needs to be reserved in the NR system for a CRS in the LTE system, so that the terminal device may determine the location of the center subcarrier based on the frequency location information, determine the shared frequency of LTE and NR based on the bandwidth information, and further determine, based on information such as the information about the resource occupied by the second resource in a resource block and the frequency shift, locations of the resource that needs to be reserved on the left side and the right side of the location of the center subcarrier, that is, in different areas, thereby resolving a problem that relative locations of the CRS in an RB are inconsistent on the left side and the right side of the LTE center subcarrier because of a resource shift phenomenon caused by the center subcarrier. This improves reliability of a determined location of the resource that needs to be reserved in the system.

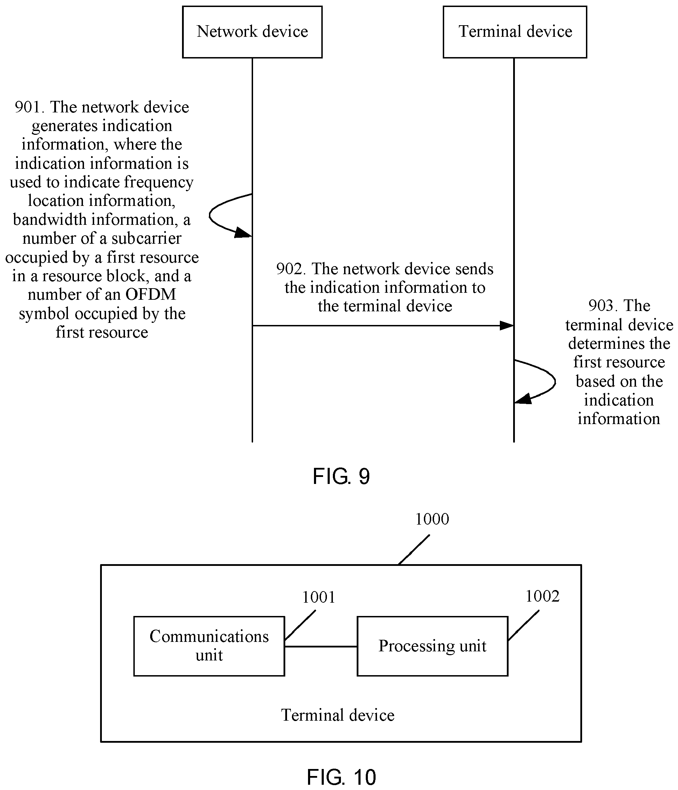

FIG. 9 is a schematic diagram of interaction of still another information indication method according to an embodiment of the present invention. Specifically, as shown in FIG. 9, the information indication method in this embodiment of the present invention may include the following steps.

901. A network device generates indication information, where the indication information indicates frequency location information, bandwidth information, a number of a subcarrier occupied by a first resource in a resource block, and a number of an OFDM symbol occupied by the first resource.

The first resource may be a resource that needs to be reserved in a second system, for example, a subcarrier that needs to be reserved in NR.

Optionally, the number of the subcarrier occupied by the first resource in a resource block may include one of [0, 6], [1, 7], [2, 8], [3, 9], [4, 10], [5, 11], [0, 3, 6, 9], [1, 4, 7, 10], and [2, 5, 8, 11] (in this case, the number is a subcarrier number in an RB). Alternatively, the subcarrier number may be indicated by indicating an index of the foregoing set. For another example, the resource information may include a subcarrier number in an RB or an index of a number set. For example, the resource information may indicate that the subcarrier number is one of [0, 6], [1, 7], [2, 8], [3, 9], [4, 10], [5, 11], [0, 3, 6, 9], [1, 4, 7, 10], and [2, 5, 8, 11]. Alternatively, the resource information may be indicated by indicating indexes of the foregoing two subcarrier sets. This is not limited in this application.

Specifically, for descriptions of the frequency location information, the bandwidth information, time domain location information such as a number of an OFDM symbol, and the like, refer to the related description of the frequency location information, the bandwidth information, and the time domain location information in the foregoing embodiments corresponding to FIG. 3 and FIG. 4. Details are not described herein again.

902. The network device sends the indication information to a terminal device.

903. The terminal device determines the first resource based on the indication information.

Specifically, after the network device sends the indication information to the terminal device, the terminal device may receive the indication information sent by the network device, and further determine the to-be-reserved first resource based on the indication information.

Optionally, the number of the subcarrier occupied by the first resource in a resource block, namely, subcarrier pattern information of an RB, may indicate information on a left side of a location of a center subcarrier, or may indicate information on a right side of a location of the center subcarrier, and this is not limited in this application. The following uses, as an example for description, subcarrier pattern information that is of an RB and that indicates the information on the left side of the location of the center subcarrier. When determining the first resource, the terminal device may obtain, by using a location of a first subcarrier (namely, a location of a subcarrier that is of the NR system and that corresponds to the LTE center subcarrier), a number N_{c} of the first subcarrier and a number N_{RB} of an RB in which the first subcarrier is located (the subcarrier number may be a subcarrier number in a BWP or may be a subcarrier number in entire bandwidth). Further, the terminal device may determine a shared frequency by using the bandwidth information and BWP information of the terminal device, or directly determine the shared frequency by using the bandwidth information, to obtain a start subcarrier number Nₛ and an end subcarrier number Nₑ. Details are not described herein again.

Further, if N_{c} is in the BWP, for subcarriers Nₛ to N_{c}, the terminal device may reserve a resource based on a location of each subcarrier in an RB, that is, a subcarrier number k in a subcarrier pattern of each RB. In this case, a number of a to-be-reserved subcarrier in each RB (the number is a number of a subcarrier in each RB) is k. For each of subcarriers N_{c}+1 to Nₑ, the terminal device may reserve a resource based on a specific location of the subcarrier in an RB and a subcarrier number (k+1) mod 12 in a subcarrier pattern of each RB. If N_{c} is outside the BWP, for each subcarrier, the terminal device may reserve a resource based on a specific location of the subcarrier in an RB, that is, a subcarrier number in a subcarrier pattern of each RB. Alternatively, a subcarrier number of the first resource (a subcarrier number in the entire bandwidth such as the BWP) is calculated based on number information of the subcarrier occupied by the first resource in a resource block, a frequency shift, a frequency location, the bandwidth information, and the like and with reference to the related description in the embodiment shown in FIG. 4. Details are not described herein again.

Optionally, if the bandwidth information includes a start RB number and an end RB number such as RB IDs, a resource waste may occur, in other words, several additional subcarriers may be reserved. For example, if the start RB number and the end RB number are respectively N_{RBs} and N_{RBe}, a number N_{c} of a first subcarrier and a number N_{RBc} of an RB in which the first subcarrier is located (the subcarrier number may be a subcarrier number in a BWP or may be a subcarrier number in entire bandwidth) may be obtained by using a location of the first subcarrier (a location of a subcarrier that is of the NR system and that corresponds to the LTE center subcarrier). Further, it may be learned, by using the start RB number and the end RB number, that a start subcarrier number and an end subcarrier number are respectively 12*N_{RBs} and 12*N_{RBe}+11, and the terminal device may further determine the first resource in a range of 12*N_{RBs} to 12*N_{RBe}+11 depending on whether the first subcarrier N_{c} is within or outside the BWP. A determining manner is similar to that in the foregoing method, and details are not described herein again.

Optionally, if the bandwidth information includes an RB bitmap, the terminal device may obtain, by using bitmap information, the first RB number and the last RB number corresponding to y1, that is, a start RB number and an end RB number, which, for example, are respectively N_{RBs} and N_{RBe}. Further, the terminal device may determine the first resource in a range of N_{RBs} to N_{RBe} depending on whether the first subcarrier N_{c} is within or outside a BWP. A determining manner is similar to that in the foregoing method, and details are not described herein again.

In this embodiment of the present invention, the network device may indicate, based on the indication information including the frequency location information, the bandwidth information, the time domain location information, and information about a resource occupied by the first resource in a resource block, location information of a subcarrier that needs to be reserved in the NR system for a CRS in an LTE system, so that the terminal device may determine the location of the center subcarrier based on the frequency location information, determine the shared frequency of LTE and NR based on the bandwidth information, and further determine, based on the information about the resource occupied by the first resource in a resource block, locations of the resource that needs to be reserved on a left side and a right side of the location of the center subcarrier, that is, in different areas, thereby resolving a problem that relative locations of the CRS in an RB are inconsistent on the left side and the right side of the LTE center subcarrier because of a resource shift phenomenon caused by the center subcarrier. This improves reliability of a determined location of the resource that needs to be reserved in the system.

The foregoing method embodiments are descriptions of examples of the information indication method in this application. Each embodiment is described with emphasis. For a part that is not described in detail in an embodiment, refer to related descriptions in other embodiments.

FIG. 10 is a possible schematic structural diagram of the terminal device in the foregoing embodiment. As shown in FIG. 10, the terminal device 1000 may include a communications unit 1001 and a processing unit 1002. The units may be configured to perform corresponding functions of the terminal device in the foregoing method examples. For example, the communications unit 1001 is configured to receive indication information from a network device, where the indication information indicates at least one of frequency location information or bandwidth information, the frequency location information includes one of a number of a first subcarrier, an absolute radio frequency channel number of the first subcarrier, or a first frequency, and the bandwidth information includes one of first bandwidth, a second subcarrier quantity, a first resource block quantity, or a second resource block bitmap. The processing unit 1002 is configured to determine a first resource based on the indication information, where the first resource is a to-be-reserved resource.

Optionally, the processing unit 1002 may be further configured to determine a location of the first subcarrier based on the frequency location information. The first resource determined in a first frequency domain range and that determined in a second frequency domain range have different locations in a resource block; or a number of a third subcarrier included in the first resource that is determined in a first frequency domain range and a number of a fourth subcarrier included in the first resource that is determined in a second frequency domain range meet the following: a remainder obtained by dividing the number of the third subcarrier by 3 is unequal to a remainder obtained by dividing the number of the fourth subcarrier by 3, or there is a difference of 1 between a remainder obtained by dividing the number of the third subcarrier by 3 and a remainder obtained by dividing the number of the fourth subcarrier by 3. The first frequency domain range includes a frequency that is in second bandwidth and that is lower than a frequency at the location of the first subcarrier, the second frequency domain range includes a frequency that is in the second bandwidth and that is higher than the frequency at the location of the first subcarrier, and the second bandwidth is determined based on the bandwidth information.

Optionally, the indication information further indicates first information, and the first information includes a number of an orthogonal frequency division multiplexing OFDM symbol occupied by the first resource. For example, the number includes {0, 1, 4, 7, 8, 11}, {2, 5, 6, 9}, {2, 5, 9}, {1, 4, 5, 8}, {0, 4, 7, 11}, {1, 4, 8}, {0, 3, 6, 7, 10}, or {3, 6, 10}.

Optionally, the indication information further indicates second information, the second information includes information about a resource occupied by the first resource in a resource block, and the resource information includes at least one of a subcarrier quantity and a subcarrier number.

Optionally, the indication information further indicates third information, the third information includes information about a resource occupied by a second resource in a resource block and a frequency shift, and the resource information includes at least one of a subcarrier quantity and a subcarrier number.

Optionally, the indication information further indicates fourth information, and the fourth information includes antenna port information and a frequency shift.

It should be noted that, in this embodiment of the present invention, unit division is an example, and is merely a logical function division. In actual implementation, another division manner may be used. Functional units in this embodiment of the present invention may be integrated into one processing unit, or each of the units may exist alone physically, or two or more units may be integrated into one unit. The integrated unit may be implemented in a form of hardware, or may be implemented in a form of a software functional unit.

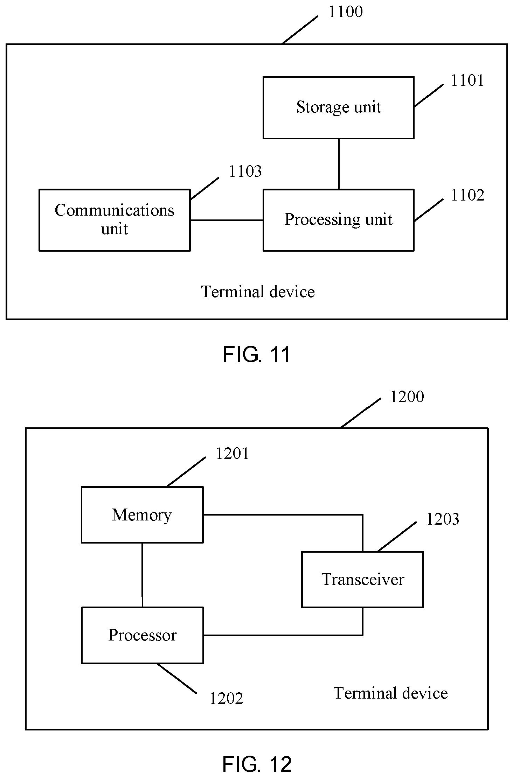

When an integrated unit is used, FIG. 11 is another possible schematic structural diagram of the terminal device in the foregoing embodiment. As shown in FIG. 11, the terminal device 1100 may include a processing unit 1102 and a communications unit 1103. The processing unit 1102 may be configured to control and manage an action of the terminal device. For example, the processing unit 1102 is configured to support the terminal device in performing step 303 in FIG. 3, step 403 in FIG. 4, step 803 in FIG. 8, and step 903 in FIG. 9, and/or is configured to perform another process of the technology described in this specification. The communications unit 1103 is configured to support the terminal device in communicating with another network entity, for example, communicating with functional units or network entities such as the network device shown in FIG. 3 to FIG. 10. The terminal device may further include a storage unit 1101, configured to store program code and data of the terminal device.

The processing unit 1102 may be a processor or a controller, for example, a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or a combination thereof. The processing unit 1102 may implement or execute various example logical blocks, modules, and circuits described with reference to content disclosed in this application. Alternatively, the processor may be a combination implementing a computing function, for example, a combination of one or more microprocessors, or a combination of a DSP and a microprocessor. The communications unit 1103 may be a transceiver, or may include a receiver and a transmitter that are independent. The storage unit 1101 may be a memory.

As shown in FIG. 12, in another embodiment, the terminal device 1200 may include a processor 1202, a transceiver 1203, and a memory 1201. The transceiver 1203, the processor 1202, and the memory 1201 may be connected to each other. The processor may perform a function of the foregoing processing unit 1102, a function of the transceiver may be similar to that of the foregoing communications unit 1103, and a function of the memory may be similar to that of the foregoing storage unit 1101. Details are not described herein again.

Method or algorithm steps described in combination with the content disclosed in this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor may read information from the storage medium or write information into the storage medium. Certainly, the storage medium may be a component of the processor. The processor and the storage medium may be located in an ASIC. In addition, the ASIC may be located in a terminal device. Certainly, the processor and the storage medium may exist in the terminal device as discrete components.

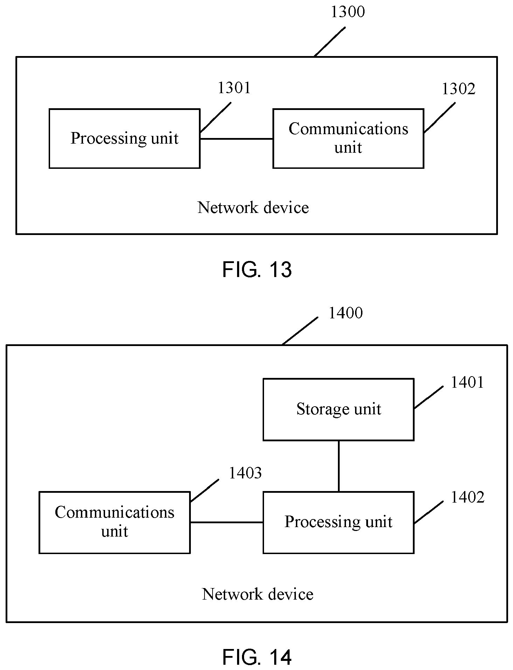

FIG. 13 is a possible schematic structural diagram of the network device in the foregoing embodiment. As shown in FIG. 13, the network device 1300 may include a processing unit 1301 and a communications unit 1302. The units may be configured to perform corresponding functions of the network device in the foregoing method examples. For example, the processing unit 1301 is configured to generate indication information, where the indication information indicates at least one of frequency location information or bandwidth information, the frequency location information includes one of a number of a first subcarrier, an absolute radio frequency channel number of the first subcarrier, or a first frequency, and the bandwidth information includes one of first bandwidth, a second subcarrier quantity, a first resource block quantity, or a second resource block bitmap. The communications unit 1302 is configured to send the indication information to a terminal device.

Optionally, the indication information further indicates first information, and the first information includes a number of an orthogonal frequency division multiplexing OFDM symbol occupied by the first resource. For example, the number includes {0, 1, 4, 7, 8, 11}, {2, 5, 6, 9}, {2, 5, 9}, {1, 4, 5, 8}, {0, 4, 7, 11}, {1, 4, 8}, {0, 3, 6, 7, 10}, or {3, 6, 10}.

Optionally, the indication information further indicates second information, the second information includes information about a resource occupied by the first resource in a resource block, and the resource information includes at least one of a subcarrier quantity and a subcarrier number.

Optionally, the indication information further indicates third information, the third information includes information about a resource occupied by a second resource in a resource block and a frequency shift, and the resource information includes at least one of a subcarrier quantity and a subcarrier number.

Optionally, the indication information further indicates fourth information, and the fourth information includes antenna port information and a frequency shift.

It should be noted that, in this embodiment of the present invention, unit division is an example, and is merely a logical function division. In actual implementation, another division manner may be used. Functional units in this embodiment of the present invention may be integrated into one processing unit, or each of the units may exist alone physically, or two or more units may be integrated into one unit. The integrated unit may be implemented in a form of hardware, or may be implemented in a form of a software functional unit.

When an integrated unit is used, FIG. 14 is another possible schematic structural diagram of the network device in the foregoing embodiment. As shown in FIG. 14, the network device 1400 may include a processing unit 1402 and a communications unit 1403. The processing unit 1402 may be configured to control and manage an action of the network device. For example, the processing unit 1402 is configured to support the network device in performing steps 301 and 302 in FIG. 3, steps 401 and 402 in FIG. 4, steps 801 and 802 in FIG. 8, and steps 901 and 902 in FIG. 9, and/or is configured to perform another process of the technology described in this specification. The communications unit 1403 is configured to support the network device in communicating with another network entity, for example, communicating with functional units or network entities such as the terminal device shown in FIG. 3 to FIG. 9. The network device may further include a storage unit 1401, configured to store program code and data of the network device.

The processing unit 1402 may be a processor or a controller, for example, a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or a combination thereof. The processing unit 1402 may implement or execute various example logical blocks, modules, and circuits described with reference to content disclosed in this application. Alternatively, the processor may be a combination implementing a computing function, for example, a combination of one or more microprocessors, or a combination of a DSP and a microprocessor. The communications unit 1403 may be a transceiver, or may include a receiver and a transmitter that are independent. The storage unit 1401 may be a memory.

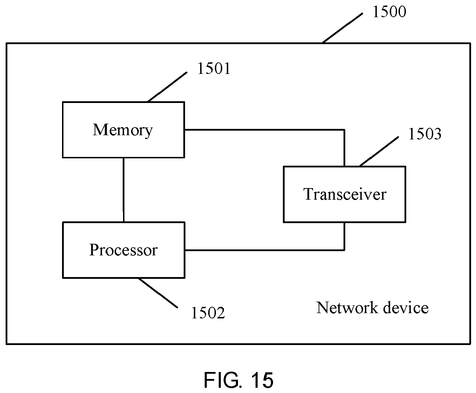

As shown in FIG. 15, in another embodiment, the network device 1500 may include a processor 1502, a transceiver 1503, and a memory 1501. The transceiver 1503, the processor 1502, and the memory 1501 are connected to each other. The processor may perform a function of the foregoing processing unit 1402, a function of the transceiver may be similar to that of the foregoing communications unit 1403, and a function of the memory may be similar to that of the foregoing storage unit 1401. Details are not described herein again.

Method or algorithm steps described in combination with the content disclosed in this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor may read information from the storage medium or write information into the storage medium. Certainly, the storage medium may be a component of the processor. The processor and the storage medium may be located in an ASIC. In addition, the ASIC may be located in a network device. Certainly, the processor and the storage medium may exist in the network device as discrete components.

In an implementation process, steps in the foregoing methods may be implemented by using a hardware integrated logical circuit in the processor, or by using instructions in a form of software. The steps of the method disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be further understood that "first", "second", "third", "fourth", and various numbers are merely used for differentiation for ease of description, and are not construed as a limitation on the scope of the embodiments of the present invention.

The term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of the present invention.

A person of ordinary skill in the art may be aware that, in combination with illustrative logical blocks (illustrative logical block) and steps (step) described in the embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

## Claims

1. An information indication method, comprising:
receiving (302), by a terminal device, indication information from a network device, wherein the indication information indicates a location of a first subcarrier and bandwidth information, wherein the bandwidth information indicates a resource block, RB, quantity corresponding to a bandwidth of a first system; and
determining (303), by the terminal device, a first resource based on the indication information, wherein the first resource is to-be-reserved in a second system for receiving a reference signal in a first system;
wherein the first subcarrier is a subcarrier of the second system corresponding to a center subcarrier of the first system.

2. The method according to claim 1, wherein the indication information further indicates fourth information, and the fourth information comprises antenna port information and a frequency shift.

3. The method according to claim 1 or 2, wherein the first resource is a resource to be reserved in the second system for a cell-specific reference signal CRS in the first system.

4. The method according to any one of claims 1 to 3, wherein the first system is an LTE system, and the second system is an NR system.

5. The method according to any one of claims 1 to 4, wherein locations of the first resource on a left side and a right side of first subcarrier in the second system that corresponds to the center subcarrier of the first system are different.

6. The method according to any one of claims 1 to 5, wherein the location of a first subcarrier comprising a number of a first subcarrier.

7. An information indication method, comprising:
sending (302), by the network device, indication information to a terminal device, wherein the indication information indicates a location of a first subcarrier and bandwidth information, wherein the bandwidth information indicates a resource block, RB, quantity corresponding to a bandwidth of a first system, the indication information indicates the terminal to reserve a reserved resource in a second system accessed by the terminal device for receiving a reference signal in a first system;
wherein the first subcarrier is a subcarrier of the second system corresponding to a center subcarrier of the first system.

8. The method according to claim 7, wherein the indication information further indicates fourth information, and the fourth information comprises antenna port information and a frequency shift.

9. The method according to claim 7 or 8, wherein the first resource is a resource to be reserved in the second system for a cell-specific reference signal CRS in the first system.

10. The method according to any one of claims 7 to 9, wherein the first system is an LTE system, and the second system is an NR system.

11. The method according to any one of claims 7 to 10, wherein locations of the first resource on a left side and a right side of first subcarrier in the second system that corresponds to the center subcarrier of the first system are different.

12. The method according to any one of claims 7 to 11, wherein the location of a first subcarrier comprising a number of a first subcarrier.

13. A terminal device, comprising a processor and a memory, wherein the memory stores an instruction, and when reading and executing the instruction, the processor performs the method according to any one of claims 1 to 6.

14. A network device, comprising a processor and a memory, wherein the memory stores an instruction, and when reading and executing the instruction, the processor performs the method according to any one of claims 7 to 12.

15. A computer storage medium, comprising a computer readable instruction, wherein when a computer reads and executes the computer readable instruction, the computer performs the method according to any one of claims 1 to 12.

16. A communications network system, comprising the terminal device according to claim 13 and the network device according to claim 14.

## Patentansprüche

1. Informationsangabeverfahren, umfassend:
Empfangen (302) von Angabeinformationen von einer Netzvorrichtung durch eine Endgerätevorrichtung, wobei die Angabeinformationen einen Ort eines ersten Subträgers und Bandbreiteninformationen angeben, wobei die Bandbreiteninformationen eine Ressourcenblock- bzw. RB-Quantität angeben, die einer Bandbreite eines ersten Systems entspricht; und
Bestimmen (303) einer ersten Ressource durch die Endgerätevorrichtung auf der Basis der Angabeinformationen, wobei die erste Ressource in einem zweiten System zum Empfangen eines Referenzsignals in einem ersten System zu reservieren ist;
wobei der erste Subträger ein Subträger des zweiten Systems ist, der einem Mitten-Subträger des ersten Systems entspricht.

2. Verfahren nach Anspruch 1, wobei die Angabeinformationen ferner vierte Informationen angeben und die vierten Informationen Antennenportinformationen und eine Frequenzverschiebung umfassen.

3. Verfahren nach Anspruch 1 oder 2, wobei die erste Ressource eine Ressource ist, die in dem zweiten System für ein zellenspezifisches Referenzsignal CRS in dem ersten System zu reservieren ist.

4. Verfahren nach einem der Ansprüche 1 bis 3, wobei das erste System ein LTE-System und das zweite System ein NR-System ist.

5. Verfahren nach einem der Ansprüche 1 bis 4, wobei Orte der ersten Ressource auf einer linken Seite und einer rechten Seite des ersten Subträgers in dem zweiten System, der dem Mitten-Subträger des ersten Systems entspricht, verschieden sind.

6. Verfahren nach einem der Ansprüche 1 bis 5, wobei der Ort des ersten Subträgers eine Nummer eines ersten Subträgers umfasst.

7. Informationsangabeverfahren, umfassend:
Senden (302) von Angabeinformationen zu einer Endgerätevorrichtung durch die Netzvorrichtung, wobei die Angabeinformationen einen Ort eines ersten Subträgers und Bandbreiteninformationen angeben, wobei die Bandbreiteninformationen eine Ressourcenblock- bzw. RB-Quantität angeben, die einer Bandbreite eines ersten Systems entspricht, wobei die Angabeinformationen dem Endgerät angeben, eine reservierte Ressource in einem zweiten System zu reservieren, worauf die Endgerätevorrichtung zum Empfang eines Referenzsignals in einem ersten System zugreift;
wobei der erste Subträger ein Subträger des zweiten Systems ist, der einem Mitten-Subträger des ersten Systems entspricht.

8. Verfahren nach Anspruch 7, wobei die Angabeinformationen ferner vierte Informationen angeben und die vierten Informationen Antennenportinformationen und eine Frequenzverschiebung umfassen.

9. Verfahren nach Anspruch 7 oder 8, wobei die erste Ressource eine Ressource ist, die in dem zweiten System für ein zellenspezifisches Referenzsignal CRS in dem ersten System zu reservieren ist.

10. Verfahren nach einem der Ansprüche 7 bis 9, wobei das erste System ein LTE-System und das zweite System ein NR-System ist.

11. Verfahren nach einem der Ansprüche 7 bis 10, wobei Orte der ersten Ressource auf einer linken Seite und einer rechten Seite des ersten Subträgers in dem zweiten System, der dem Mitten-Subträger des ersten Systems entspricht, verschieden sind.

12. Verfahren nach einem der Ansprüche 7 bis 11, wobei der Ort eines ersten Subträgers eine Nummer eines ersten Subträgers umfasst.

13. Endgerätevorrichtung mit einem Prozessor und einem Speicher, wobei der Speicher eine Anweisung speichert, und der Prozessor beim Lesen und Ausführen der Anweisung das Verfahren nach einem der Ansprüche 1 bis 6 ausführt.

14. Netzvorrichtung mit einem Prozessor und einem Speicher, wobei der Speicher eine Anweisung speichert, und der Prozessor beim Lesen und Ausführen der Anweisung das Verfahren nach einem der Ansprüche 7 bis 12 ausführt.

15. Computer-Speicherungsmedium, das eine computerlesbare Anweisung umfasst, wobei, wenn ein Computer die computerlesbare Anweisung liest und ausführt, der Computer das Verfahren nach einem der Ansprüche 1 bis 12 ausführt.

16. Kommunikationsnetzsystem, das die Endgerätevorrichtung nach Anspruch 13 und die Netzvorrichtung nach Anspruch 14 umfasst.

## Revendications

1. Procédé d'indication d'informations, comprenant :
la réception (302), par un dispositif terminal, d'informations d'indications provenant d'un dispositif de réseau, les informations d'indications indiquant un emplacement d'une première sous-porteuse et d'informations de bande passante, les informations de bande passante indiquant une quantité de blocs de ressources, RB, correspondant à une bande passante d'un premier système ; et
la détermination (303), par le dispositif terminal, d'une première ressource sur la base des informations d'indications, la première ressource devant être réservée dans un second système pour recevoir un signal de référence dans un premier système ;
dans lequel la première sous-porteuse est une sous-porteuse du second système correspondant à une sous-porteuse centrale du premier système.

2. Procédé selon la revendication 1, dans lequel les informations d'indications indiquent en outre des quatrièmes informations, et les quatrièmes informations comprennent des informations de port d'antenne et un décalage de fréquences.

3. Procédé selon la revendication 1 ou 2, dans lequel la première ressource est une ressource à réserver dans le second système pour un signal de référence spécifique à une cellule CRS dans le premier système.

4. Procédé selon l'une quelconque des revendications 1 à 3, dans lequel le premier système est un système LTE, et le second système est un système NR

5. Procédé selon l'une quelconque des revendications 1 à 4, dans lequel les emplacements de la première ressource sur un côté gauche et un côté droit d'une première sous-porteuse dans le second système qui correspond à la sous-porteuse centrale du premier système sont différents.

6. Procédé selon l'une quelconque des revendications 1 à 5, dans lequel l'emplacement d'une première sous-porteuse comprend un numéro d'une première sous-porteuse.

7. Procédé d'indication d'informations, comprenant :
l'envoi (302), par le dispositif de réseau, d'informations d'indications à un dispositif terminal, les informations d'indications indiquant un emplacement d'une première sous-porteuse et des informations de bande passante, les informations de bande passante indiquant une quantité de blocs de ressources, RB, correspondant à une bande passante d'un premier système, les informations d'indications indiquent au terminal de réserver une ressource réservée dans un second système auquel le dispositif terminal a accès pour recevoir un signal de référence dans un premier système ;
dans lequel la première sous-porteuse est une sous-porteuse du second système correspondant à une sous-porteuse centrale du premier système.

8. Procédé selon la revendication 7, dans lequel les informations d'indications indiquent en outre des quatrièmes informations, et les quatrièmes informations comprennent des informations de port d'antenne et un décalage de fréquences.

9. Procédé selon la revendication 7 ou 8, dans lequel la première ressource est une ressource à réserver dans le second système pour un signal de référence spécifique à une cellule CRS dans le premier système.

10. Procédé selon l'une quelconque des revendications 7 à 9, dans lequel le premier système est un système LTE, et le second système est un système NR

11. Procédé selon l'une quelconque des revendications 7 à 10, dans lequel les emplacements de la première ressource sur un côté gauche et un côté droit d'une première sous-porteuse dans le second système qui correspond à la sous-porteuse centrale du premier système sont différents.

12. Procédé selon l'une quelconque des revendications 7 à 11, dans lequel l'emplacement d'une première sous-porteuse comprend un numéro d'une première sous-porteuse.

13. Dispositif terminal, comprenant un processeur et une mémoire, la mémoire stockant une instruction, et lors de la lecture et de l'exécution de l'instruction, le processeur met en œuvre le procédé selon l'une quelconque des revendications 1 à 6.

14. Dispositif de réseau, comprenant un processeur et une mémoire, la mémoire stockant une instruction, et lors de la lecture et de l'exécution de l'instruction, le processeur met en œuvre le procédé selon l'une quelconque des revendications 7 à 12.

15. Support de stockage informatique, comprenant une instruction lisible par ordinateur, dans lequel lorsqu'un ordinateur lit et exécute l'instruction lisible par ordinateur, l'ordinateur met en œuvre le procédé selon l'une quelconque des revendications 1 à 12.

16. Système de réseau de communication, comprenant le dispositif terminal selon la revendication 13 et le dispositif de réseau selon la revendication 14.
